(19) Europäisches Patentamt
European Patent Office
Office européen des brevets

(11) **EP 3 185 238 B1**

(12) **EUROPEAN PATENT SPECIFICATION**

(45) Date of publication and mention
of the grant of the patent:
**19.08.2020   Bulletin 2020/34**

(21) Application number: **14883529.1**

(22) Date of filing: **03.12.2014**

(51) Int Cl.:
**G06T 7/13** (2017.01)

(86) International application number:
**PCT/CN2014/092864**

(87) International publication number:
**WO 2016/026238 (25.02.2016 Gazette 2016/08)**

(54) **IMAGE BORDER RECOGNITION METHOD, DEVICE AND DISPLAY PANEL**

BILDRANDERKENNUNGSVERFAHREN UND -VORRICHTUNG SOWIE ANZEIGETAFEL

PROCÉDÉ, DISPOSITIF ET PANNEAU D'AFFICHAGE POUR RECONNAISSANCE DE BORDURE D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.08.2014   CN 201410415432**

(43) Date of publication of application:
**28.06.2017   Bulletin 2017/26**

(73) Proprietors:
• **BOE Technology Group Co., Ltd.**
  **Beijing 100015 (CN)**
• **Beijing BOE Optoelectronics Technology Co., Ltd.**
  **Beijing 100176 (CN)**

(72) Inventors:
• **LIU, Peng**
  **Beijing 100176 (CN)**
• **DONG, Xue**
  **Beijing 100176 (CN)**
• **GUO, Renwei**
  **Beijing 100176 (CN)**
• **YANG, Kai**
  **Beijing 100176 (CN)**

(74) Representative: **Klunker IP**
**Patentanwälte PartG mbB**
**Destouchesstraße 68**
**80796 München (DE)**

(56) References cited:
**CN-A- 101 286 233     CN-A- 101 340 577**
**CN-A- 102 129 681     CN-A- 102 393 959**
**CN-A- 103 606 163     US-B1- 6 674 905**

• **SANJAY KUMAR MAURYA ET AL: "Image Enhancement by Intensity Based Interpolation and Selective Threshold", COMMUNICATION SYSTEMS AND NETWORK TECHNOLOGIES (CSNT), 2012 INTERNATIONAL CONFERENCE ON, IEEE, 11 May 2012 (2012-05-11), pages 174-178, XP032182942, DOI: 10.1109/CSNT.2012.213 ISBN: 978-1-4673-1538-8**
• **TAMAR PELI ET AL: "A study of edge detection algorithms", COMPUTER GRAPHICS AND IMAGE PROCESSING, vol. 20, no. 1, 1 September 1982 (1982-09-01), pages 1-21, XP055434408, US ISSN: 0146-664X, DOI: 10.1016/0146-664X(82)90070-3**

**Description**

TECHNICAL FIELD

The present invention relates to the field of display technique, and more particularly, to a method for discriminating a boundary of image, a device for discriminating a boundary of image, and a display panel.

BACKGROUND

Virtual algorithm is a new image processing measure. With regard to a particular pixel arrangement, virtual algorithm can improve a lower physical resolution to a higher virtual resolution, optimize display effect, and enhance visual experience of human eyes.

Virtual algorithm usually adopts filters to process input signals, the input signals are re-sampled by the filters for allocation, thus realizing virtual display. But the filters in virtual algorithm can not accurately process different types of image, for example, color edge may appear in some filters in a case of a slant pattern, this phenomenon is typically called as color aliasing. In order to reduce color aliasing effect, on one hand, it needs to constantly test and feed back, optimize the filters, thus improving display effect; on the other hand, it needs to adopt different filters to process a different type of image or a different location on the same image. For example, usually, a universal filter is adopted for a location having no boundary, and a boundary filter is adopted for a location having a boundary.

Sanjay Kumar Maurya et al. disclose in "Image Enhancement by Intensity based Interpolation and Selective Threshold", 2012 International Conference on Communication Systems and Network Technologies a technique for image enhancement considering pixel intensity variation for interpolation. Edges are determined by comparing the intensity variations between a centre pixel and its neighboring pixels within a sliding window. Based on designed thresholds extrapolated blank pixels are filled. A sliding window size of 5*5 pixels provided better results over a sliding window size of 3*3 pixels. To implement filtering in different situations, it needs to process luminance signals of input data, design discriminating process, identify sharp boundaries therein, classify specific horizontal line, vertical line, left diagonal line, and right diagonal line, thereby adopting different filters.

Therefore, how to effectively discriminate a boundary of an image is a technical problem that needs to be immediately solved by those skilled in the art.

SUMMARY

In view of the above, it is an object of the present invention to provide a method for discriminating a boundary of image and a device for discriminating a boundary of image, which effectively discriminate whether an image has a boundary and in which direction the boundary is, thus a display effect of a display panel is improved.

The object is achieved by the features of the respective independent claims. Further embodiments are defined in the respective dependent claims.

BRIEF DESCRIPTION OF THE DRAWINGS

FIG. 1 is a flowchart of a method for discriminating a boundary of image provided by an embodiment of the present disclosure;

FIG. 2 is a schematic diagram of a first distribution of a $n \times n$ matrix and a $(n + 2) \times (n + 2)$ matrix provided by an embodiment of the present disclosure;

FIG. 3 is a schematic diagram of a second distribution of a $n \times n$ matrix and a $(n + 2) \times (n + 2)$ matrix provided by an embodiment of the present disclosure;

FIG. 4 is a schematic diagram of a third distribution of a $n \times n$ matrix and a $(n + 2) \times (n + 2)$ matrix provided by an embodiment of the present disclosure; and

FIG. 5 is a schematic diagram of structure of a device for discriminating a boundary of image provided by an embodiment of the present disclosure.

DETAILED DESCRIPTION OF THE EMBODIMENTS

Hereinafter, the technical solutions in the embodiments of the present disclosure will be described clearly and comprehensively in combination with the drawings in the embodiments of the present disclosure.

To implement filtering in different situations, it needs to process luminance signals of input data, design discriminating process, identify sharp boundaries therein, classify specific horizontal line, vertical line, left diagonal line, and right diagonal line, thereby adopting different filters.

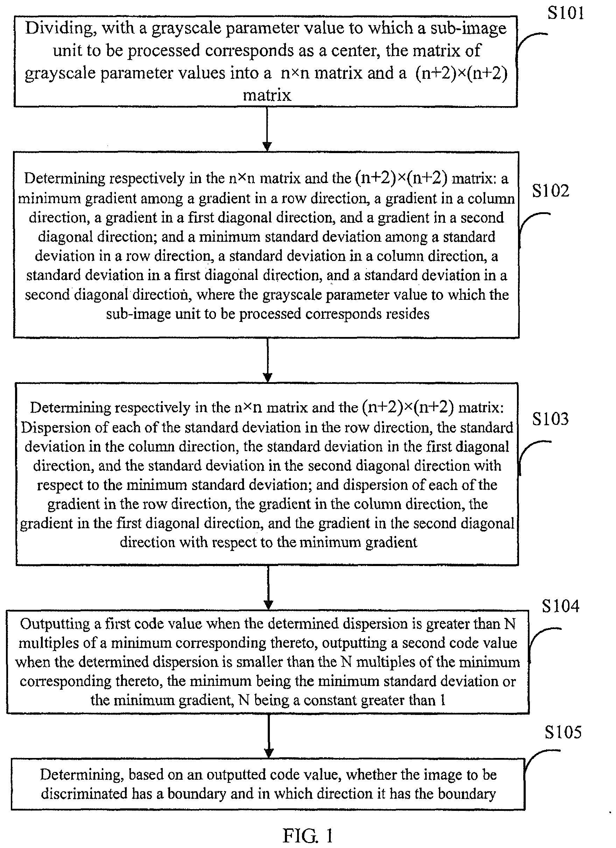

To facilitate discriminating an image boundary, as shown in FIG. 1, a flowchart of a method for discriminating a boundary of image provided by an embodiment of the present disclosure, the present disclosure provides a method for discriminating a boundary of image comprising:

step S101, receiving a component value information of a grayscale parameter of each pixel unit from among an image information to be discriminated to form a matrix of grayscale parameter values, and dividing, with a grayscale parameter value corresponding to a pixel unit to be processed as a center, the matrix of grayscale parameter values into a $n \times n$ matrix and a $(n + 2) \times (n + 2)$ matrix, n representing a number of grayscale parameter values in a row direction or in a column direction, and n being an odd number greater than 1, the grayscale parameter being a luminance parameter or a chromaticity parameter;

step S102, determining respectively in the $n \times n$ matrix and the $(n + 2) \times (n + 2)$ matrix: a minimum gradient among a gradient in a row direction, a gradient in a column direction, a gradient in a first diagonal direction, and a gradient in a second diagonal direction, where the grayscale parameter value corresponding to the pixel unit to be processed resides; and a minimum standard deviation among a standard deviation in a row direction, a standard deviation in a column direction, a standard deviation in a first diagonal direction, and a standard deviation in a second diagonal direction, where the grayscale parameter value corresponding to the pixel unit to be processed resides;

step S103, determining respectively in the $n \times n$ matrix and the $(n + 2) \times (n + 2)$ matrix: dispersion of each of the standard deviation in the row direction, the standard deviation in the column direction, the standard deviation in the first diagonal direction, and the standard deviation in the second diagonal direction with respect to the minimum standard deviation; and dispersion of each of the gradient in the row direction, the gradient in the column direction, the gradient in the first diagonal direction, and the gradient in the second diagonal direction with respect to the minimum gradient;

step S104, outputting a first code value when the determined dispersion is greater than N multiples of a minimum corresponding thereto, outputting a second code value when the determined dispersion is smaller than the N multiples of the minimum corresponding thereto, the minimum being the minimum standard deviation or the minimum gradient, N being a constant greater than 1;

step S105, determining, based on an outputted code value, whether the image to be discriminated has a boundary and in which direction the boundary is.

The method for discriminating the boundary of image provided by the present disclosure can process the received image information to be discriminated based on either the luminance component or the chromaticity component, obtain an $n \times n$ matrix and an $(n + 2) \times (n + 2)$ matrix with a grayscale parameter value corresponding to a pixel unit to be processed as a center, adopt parameters such as gradient, standard deviation, dispersion, and so on to discriminate an image to which the $n \times n$ matrix and the $(n + 2) \times (n + 2)$ matrix corresponds respectively, so that the method can discriminate whether an image has a boundary and in which direction the boundary is. A correct filter may be selected according to a discriminating result, to improve processing effect achieved by the filter on the image, thus a display effect of a display panel is improved.

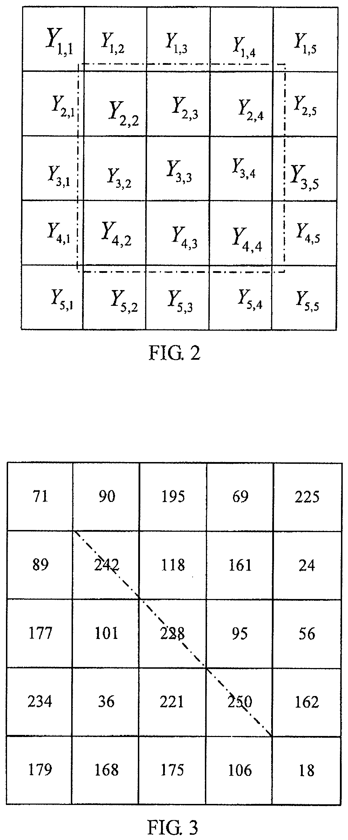

As shown in FIG. 2, FIG. 2 is a schematic diagram of a first distribution of a $n \times n$ matrix and a $(n + 2) \times (n + 2)$ matrix provided by an embodiment of the present disclosure. To facilitate understanding the method for discriminating the boundary of image provided by the present disclosure, the method for discriminating the boundary of image provided by the present disclosure will be explained with reference to FIG. 2. A $3 \times 3$ matrix and a $5 \times 5$ matrix are shown, wherein $Y_{3,3}$ represents a grayscale parameter value to which a pixel unit to be processed corresponds.

The above step S102 of determining respectively in the $n \times n$ matrix and the $(n + 2) \times (n + 2)$ matrix: a minimum gradient among a gradient in a row direction, a gradient in a column direction, a gradient in a first diagonal direction, and a gradient in a second diagonal direction, where the grayscale parameter value corresponding to the pixel unit to be processed resides; and a minimum standard deviation among a standard deviation in a row direction, a standard deviation in a column direction, a standard deviation in a first diagonal direction, and a standard deviation in a second diagonal direction, where the grayscale parameter value corresponding to the pixel unit to be processed resides specifically comprises steps as below.

When determining respectively in the $n \times n$ matrix and the $(n + 2) \times (n + 2)$ matrix: a minimum gradient among a gradient in a row direction, a gradient in a column direction, a gradient in a first diagonal direction, and a gradient in a second diagonal direction, where the grayscale parameter value corresponding to the pixel unit to be processed

$$G_x = \sum_{i=1}^{n} \left| Y_{xi} - Y_{x(i+1)} \right|$$

resides, the gradient in each direction is a sum of absolute values of two adjacent grayscale parameter values in this direction, G representing a gradient, x representing a direction (in this scheme the direction is a row direction or a column direction), $Y_{xi}$ representing an i-th grayscale parameter value in the x direction, n representing the number of grayscale parameter values in a row direction or in a column direction (in fact, it is the number of grayscale parameter values in the x direction, but in the present disclosure, the number in the row direction and the number in the column direction are the same).

With the matrix shown in FIG. 2 as example, in the $3 \times 3$ matrix:

the gradient in a horizontal direction:

$$G_{H9} = \sum_{i=1}^{3} \left| Y_{Hi} - Y_{H(i+1)} \right| = \left| Y_{3,2} - Y_{3,3} \right| + \left| Y_{3,3} - Y_{3,4} \right| ;$$

the gradient in a vertical direction:

$$G_{V9} = \sum_{i=1}^{3} \left| Y_{Vi} - Y_{V(i+1)} \right| = \left| Y_{2,3} - Y_{3,3} \right| + \left| Y_{3,3} - Y_{4,3} \right| ;$$

the gradient in the first diagonal direction:

$$G_{LD9} = \sum_{i=1}^{3} \left| Y_{LDi} - Y_{LD(i+1)} \right| = \left| Y_{2,4} - Y_{3,3} \right| + \left| Y_{3,3} - Y_{4,2} \right| ;$$

the gradient in the second diagonal direction:

$$G_{RD9} = \sum_{i=1}^{3} \left| Y_{RDi} - Y_{RD(i+1)} \right| = \left| Y_{2,2} - Y_{3,3} \right| + \left| Y_{3,3} - Y_{4,4} \right| ;$$

in the $5 \times 5$ matrix:

the gradient in a horizontal direction:

$$G_{H25} = \sum_{i=1}^{5} \left| Y_{Hi} - Y_{H(i+1)} \right| = \left| Y_{3,1} - Y_{3,2} \right| + \left| Y_{3,2} - Y_{3,3} \right| + \left| Y_{3,3} - Y_{3,4} \right| + \left| Y_{3,4} - Y_{3,5} \right| ;$$

the gradient in a vertical direction:

$$G_{V25} = \sum_{i=1}^{5} \left| Y_{Vi} - Y_{V(i+1)} \right| = \left| Y_{1,3} - Y_{2,3} \right| + \left| Y_{2,3} - Y_{3,3} \right| + \left| Y_{3,3} - Y_{4,3} \right| + \left| Y_{4,3} - Y_{5,3} \right| ;$$

the gradient in the first diagonal direction:

$$G_{LD25} = \sum_{i=1}^{5} \left| Y_{LDi} - Y_{LD(i+1)} \right| = \left| Y_{1,5} - Y_{2,4} \right| + \left| Y_{2,4} - Y_{3,3} \right| + \left| Y_{3,3} - Y_{4,2} \right| + \left| Y_{4,2} - Y_{5,1} \right| ;$$

the gradient in the second diagonal direction:

$$G_{RD25} = \sum_{i=1}^{5} \left| Y_{RDi} - Y_{RD(i+1)} \right| = \left| Y_{1,1} - Y_{2,2} \right| + \left| Y_{2,2} - Y_{3,3} \right| + \left| Y_{3,3} - Y_{4,4} \right| + \left| Y_{4,4} - Y_{5,5} \right| .$$

The above step S102 further comprises: comparing the gradient in the row direction, the gradient in the column direction, the gradient in the first diagonal direction, and the gradient in the second diagonal direction in the $n \times n$ matrix to obtain a first minimum gradient; comparing the gradient in the row direction, the gradient in the column direction, the gradient in the first diagonal direction, and the gradient in the second diagonal direction in the $(n + 2) \times (n + 2)$ matrix to obtain a second minimum gradient;

As shown in FIG. 2, it is supposed that a comparison result is that the first minimum gradient is $G_{V9}$, the second minimum gradient is $G_{LD25}$.

The above step S102 further comprises: determining, based on formula $S_x = \frac{1}{n} \sqrt{\sum_{i=1}^{n} (Y_{xi} - \overline{Y}_x)^2}$, in the $n \times n$ matrix and the $(n + 2) \times (n + 2)$ matrix: a standard deviation in a row direction, a standard deviation in a column direction, a standard deviation in a first diagonal direction, and a standard deviation in a second diagonal direction, where the grayscale parameter value corresponding to the pixel unit to be processed resides, wherein S represents the standard deviation, x represents a direction, $Y_{xi}$ represents an i-th grayscale parameter value in the x direction, $\overline{Y}_x$ represents an average of grayscale parameter values in the x direction, n represents the number of gray scale parameter values in a row direction or in a column direction,

$$\overline{Y}_x = \frac{\sum_{i=1}^{n} Y_{xi}}{n} .$$

With the matrix shown in FIG. 2 as example, in the $3 \times 3$ matrix:

the standard deviation in a horizontal direction:

$$S_{H9} = \frac{1}{3} \sqrt{\sum_{i=1}^{3} (Y_{xi} - \overline{Y}_x)^2} = \frac{1}{3} \sqrt{\left( Y_{3,2} - \overline{Y}_H \right)^2 + \left( Y_{3,3} - \overline{Y}_H \right)^2 + \left( Y_{3,4} - \overline{Y}_H \right)^2} ;$$

$$\overline{Y}_H = \frac{\sum_{i=1}^{3} Y_{Hi}}{3} = \frac{Y_{3,2} + Y_{3,3} + Y_{3,4}}{3} ;$$

the standard deviation in a vertical direction:

$$S_{V9} = \frac{1}{3} \sqrt{\sum_{i=1}^{3} (Y_{Vi} - \overline{Y}_V)^2} = \frac{1}{3} \sqrt{\left( Y_{2,3} - \overline{Y}_V \right)^2 + \left( Y_{3,3} - \overline{Y}_V \right)^2 + \left( Y_{4,3} - \overline{Y}_V \right)^2} ;$$

$$\overline{Y}_V = \frac{\sum_{i=1}^{3} Y_{Vi}}{3} = \frac{Y_{2,3} + Y_{3,3} + Y_{4,3}}{3}$$

the standard deviation in a first diagonal direction:

$$S_{LD9} = \frac{1}{3}\sqrt{\sum_{i=1}^{3}(Y_{LDi} - \overline{Y}_{LD})^2} = \frac{1}{3}\sqrt{\left(Y_{2,4} - \overline{Y}_{LD}\right)^2 + \left(Y_{3,3} - \overline{Y}_{LD}\right)^2 + \left(Y_{4,2} - \overline{Y}_{LD}\right)^2} \; ;$$

$$\overline{Y}_{LD} = \frac{\sum_{i=1}^{3} Y_{LDi}}{3} = \frac{Y_{2,4} + Y_{3,3} + Y_{4,2}}{3} \; ;$$

the standard deviation in the second diagonal direction:

$$S_{RD9} = \frac{1}{3}\sqrt{\sum_{i=1}^{3}(Y_{RDi} - \overline{Y}_{RD})^2} = \frac{1}{3}\sqrt{\left(Y_{2,2} - \overline{Y}_{RD}\right)^2 + \left(Y_{3,3} - \overline{Y}_{RD}\right)^2 + \left(Y_{4,4} - \overline{Y}_{RD}\right)^2} \; ;$$

$$\overline{Y}_{RD} = \frac{\sum_{i=1}^{3} Y_{RDi}}{3} = \frac{Y_{2,2} + Y_{3,3} + Y_{4,4}}{3} \; .$$

In the 5×5 matrix:

the standard deviation in a horizontal direction:

$$S_{H25} = \frac{1}{5}\sqrt{\sum_{i=1}^{5}(Y_{Hi} - \overline{Y}_{H})^2} = \frac{1}{5}\sqrt{\begin{array}{l}\left(Y_{3,1} - \overline{Y}_{H}\right)^2 + \left(Y_{3,2} - \overline{Y}_{H}\right)^2 + \\ \left(Y_{3,3} - \overline{Y}_{H}\right)^2 + \left(Y_{3,4} - \overline{Y}_{H}\right)^2 + \left(Y_{3,5} - \overline{Y}_{H}\right)^2\end{array}} \; ;$$

$$\overline{Y}_{H} = \frac{\sum_{i=1}^{5} Y_{Hi}}{5} = \frac{Y_{3,1} + Y_{3,2} + Y_{3,3} + Y_{3,4} + Y_{3,5}}{5} \; ;$$

the standard deviation in a vertical direction:

$$S_{V25} = \frac{1}{5}\sqrt{\sum_{i=1}^{5}(Y_{Vi} - \overline{Y}_{V})^2} = \frac{1}{5}\sqrt{\begin{array}{l}\left(Y_{1,3} - \overline{Y}_{V}\right)^2 + \left(Y_{2,3} - \overline{Y}_{V}\right)^2 \\ +\left(Y_{3,3} - \overline{Y}_{V}\right)^2 + \left(Y_{4,3} - \overline{Y}_{V}\right)^2 + \left(Y_{5,3} - \overline{Y}_{V}\right)^2\end{array}} \; ;$$

$$\overline{Y}_{V} = \frac{\sum_{i=1}^{5} Y_{Vi}}{5} = \frac{Y_{1,3} + Y_{2,3} + Y_{3,3} + Y_{4,3} + Y_{5,3}}{5} \; ;$$

the standard deviation in a first diagonal direction:

$$S_{LD25} = \frac{1}{5}\sqrt{\sum_{i=1}^{5}(Y_{LDi} - \overline{Y}_{LD})^2} = \frac{1}{5}\sqrt{\begin{array}{l}(Y_{1,5} - \overline{Y}_{LD})^2 + (Y_{2,4} - \overline{Y}_{LD})^2 + \\ (Y_{3,3} - \overline{Y}_{LD})^2 + (Y_{4,2} - \overline{Y}_{LD})^2 + (Y_{5,1} - \overline{Y}_{LD})^2\end{array}} \; ;$$

$$\overline{Y}_{LD} = \frac{\sum_{i=1}^{5}Y_{LDi}}{5} = \frac{Y_{1,5} + Y_{2,4} + Y_{3,3} + Y_{4,2} + Y_{5,1}}{5} \; ;$$

the standard deviation in the second diagonal direction:

$$S_{RD25} = \frac{1}{5}\sqrt{\sum_{i=1}^{5}(Y_{RDi} - \overline{Y}_{RD})^2} = \frac{1}{5}\sqrt{\begin{array}{l}(Y_{1,1} - \overline{Y}_{RD})^2 + (Y_{2,2} - \overline{Y}_{RD})^2 + \\ (Y_{3,3} - \overline{Y}_{RD})^2 + (Y_{4,4} - \overline{Y}_{RD})^2 + (Y_{5,5} - \overline{Y}_{RD})^2\end{array}} \; ;$$

$$\overline{Y}_{RD} = \frac{\sum_{i=1}^{5}Y_{RDi}}{5} = \frac{Y_{1,1} + Y_{2,2} + Y_{3,3} + Y_{4,4} + Y_{5,5}}{5} \; ;$$

The above step S102 further comprises: comparing the standard deviation in the row direction, the standard deviation in the column direction, the standard deviation in the first diagonal direction, and the standard deviation in the second diagonal direction in the $n \times n$ matrix to obtain a first minimum standard deviation; and comparing the standard deviation in the row direction, the standard deviation in the column direction, the standard deviation in the first diagonal direction, and the standard deviation in the second diagonal direction in the $(n + 2)\times(n + 2)$ matrix to obtain a second minimum standard deviation.

In the matrixes shown in FIG. 2, it is supposed that the comparison result is that the first minimum standard deviation is $S_{H9}$, the second minimum standard deviation is $S_{RD25}$.

The step S103 of determining respectively in the $n \times n$ matrix and the $(n + 2)\times(n + 2)$ matrix: dispersion of each of the standard deviation in the row direction, the standard deviation in the column direction, the standard deviation in the first diagonal direction, and the standard deviation in the second diagonal direction with respect to the minimum standard deviation; and dispersion of each of the gradient in the row direction, the gradient in the column direction, the gradient in the first diagonal direction, and the gradient in the second diagonal direction with respect to the minimum gradient specifically comprises: determining, based on formula

$$Dif = \frac{1}{3}\sqrt{(H - A)^2 + (V - A)^2 + (LD - A)^2 + (RD - A)^2} \; ,$$

in the $n \times n$ matrix and the $(n + 2)\times(n + 2)$ matrix: dispersion of each of the standard deviation in the row direction, the standard deviation in the column direction, the standard deviation in the first diagonal direction, and the standard deviation in the second diagonal direction with respect to the minimum standard deviation; and dispersion of each of the gradient in the row direction, the gradient in the column direction, the gradient in the first diagonal direction, and the gradient in the second diagonal direction with respect to the minimum gradient. When H, V, LD, RD respectively represent the gradient in the row direction, the gradient in the column direction, the gradient in the first diagonal direction, and the gradient in the second diagonal direction in the $n \times n$ matrix, A represents the first minimum gradient, *Dif* represents a first dispersion; when H, V, LD, RD respectively represent the standard deviation in the row direction, the standard deviation in the column direction, the standard deviation in the first diagonal direction, and the standard deviation in the second diagonal direction in the $n \times n$ matrix, A represents the first minimum standard deviation, *Dif* represents a second dispersion; when H, V, LD, RD respectively represent the gradient in the row direction, the gradient in the column direction, the gradient in the first diagonal direction, and the gradient in the second diagonal direction in the $(n + 2)\times(n + 2)$ matrix, A represents the second minimum gradient, *Dif* represents a third dispersion; when H, V, LD, RD respectively represent the standard deviation in the row direction, the standard deviation in the column direction, the standard deviation in the first diagonal direction, and the standard deviation in the second diagonal direction in the $(n + 2)\times(n + 2)$ matrix, A represents the second minimum standard deviation, *Dif* represents a fourth dispersion.

With the matrix shown in FIG. 2 as example,

the first dispersion:

$$Dif = \frac{1}{3}\sqrt{(G_{H9} - G_{V9})^2 + (G_{V9} - G_{V9})^2 + (G_{LD9} - G_{V9})^2 + (G_{RD9} - G_{V9})^2} \; ;$$

the second dispersion:

$$Dif = \frac{1}{3}\sqrt{(S_{H9} - S_{H9})^2 + (S_{V9} - S_{H9})^2 + (S_{LD9} - S_{H9})^2 + (S_{RD9} - S_{H9})^2} \; ;$$

the third dispersion:

$$Dif = \frac{1}{3}\sqrt{(G_{H25} - G_{LD25})^2 + (G_{V25} - G_{LD25})^2 + (G_{LD25} - G_{LD25})^2 + (G_{RD25} - G_{LD25})^2} \; ;$$

the fourth dispersion:

$$Dif = \frac{1}{3}\sqrt{(S_{H25} - S_{RD25})^2 + (S_{V25} - S_{RD25})^2 + (S_{LD25} - S_{RD25})^2 + (S_{RD25} - S_{RD25})^2} \; .$$

In step S104, outputting a first code value when the determined dispersion is greater than N multiples of a minimum corresponding thereto, outputting a second code value when the determined dispersion is smaller than the N multiples of the minimum corresponding thereto, the minimum being the minimum standard deviation or the minimum gradient specifically comprises:
if $Dif > N \times A$, then outputting the first code value accordingly; if $Dif < N \times A$, then outputting the second code value accordingly, N being a constant greater than 1; when $Dif$ represents the first dispersion, A represents the first minimum gradient; when $Dif$ represents the second dispersion, A represents the first minimum standard deviation; when $Dif$ represents the third dispersion, A represents the second minimum gradient; when $Dif$ represents the fourth dispersion, A represents the second minimum standard deviation.
With the matrix shown in FIG. 2 as example, the discriminating process is:

when the first dispersion $Dif > NG_{V9}$, outputting the first code value correspondingly, when the first dispersion $Dif < NG_{V9}$, outputting the second code value correspondingly;

when the second dispersion $Dif > NS_{H9}$, outputting the first code value correspondingly, when the second dispersion $Dif < NS_{H9}$, outputting the second code value correspondingly;

when the third dispersion $Dif > NG_{LD25}$, outputting the first code value correspondingly, when the third dispersion $Dif < NG_{LD25}$, outputting the second code value correspondingly;

when the fourth dispersion $Dif > NS_{RD25}$, outputting the first code value correspondingly, when the fourth dispersion $Dif < NS_{RD25}$, outputting the second code value correspondingly.

After many experiments, it can be known that, when N is a value in a range from 1.4 to 2.0, the method for discriminating the boundary of image provided by the present disclosure has a relatively high accuracy.
Optionally, N is a value of 5/3. In this case, the method for discriminating the boundary of image provided by the present disclosure has the highest accuracy.
In step S105, determining, based on an outputted code value, whether the image to be discriminated has a boundary and in which direction the boundary is specifically comprises:

when the outputted code values to which the first dispersion, the second dispersion, the third dispersion, and the fourth dispersion correspond all are the second code value, then determining that the image to be discriminated has no boundary;

when the outputted code values to which the first dispersion, the second dispersion, the third dispersion, and the fourth dispersion correspond all are the first code value, then determining that the image to be discriminated has a boundary, and the boundary is in a direction to which the smaller value of the second gradient and the second standard deviation corresponds;

when the outputted code values to which the first dispersion, the second dispersion, and the fourth dispersion correspond are the first code value, and the outputted code value to which the third dispersion corresponds is the second code value, then determining that the image to be discriminated has a boundary, and the boundary is in a direction to which the smaller value of the first gradient and the first standard deviation corresponds;

when the outputted code values to which the first dispersion, the second dispersion, and the third dispersion correspond are the first code value, and the outputted code value to which the fourth dispersion corresponds is the second code value, then determining that the image to be discriminated has a boundary, and the boundary is in a direction to which the smaller value of the first gradient and the first standard deviation corresponds;

when the outputted code values to which the first dispersion and the second dispersion correspond are the first code value, and the outputted code values to which the third dispersion and the fourth dispersion correspond are the second code value, then determining that the image to be discriminated has a boundary, and the boundary is in a direction to which the smaller value of the first gradient and the first standard deviation corresponds.

With FIG. 2 as example, when the outputted code values to which the first dispersion, the second dispersion, the third dispersion, and the fourth dispersion correspond all are the second code value, then determining that the image to be discriminated has no boundary;
when the outputted code values to which the first dispersion, the second dispersion, the third dispersion, and the fourth dispersion correspond all are the first code value, then determining that the image to be discriminated has a boundary, if $G_{LD25} < S_{RD25}$, then there is a boundary in the first diagonal direction in the $5\times5$ matrix; if $G_{LD25} > S_{RD25}$, then there is a boundary in the second diagonal direction in the $5\times5$ matrix;
when the outputted code values to which the first dispersion, the second dispersion, and the fourth dispersion correspond are the first code value, and the outputted code value to which the third dispersion corresponds is the second code value, then determining that the image to be discriminated has a boundary, if $G_{V9} < S_{H9}$, then there is a boundary in the vertical direction in the $3\times3$ matrix; if $G_{V9} > S_{H9}$, then there is a boundary in the horizontal direction in the $3\times3$ matrix;
when the outputted code values to which the first dispersion, the second dispersion, and the third dispersion correspond are the first code value, and the outputted code value to which the fourth dispersion corresponds is the second code value, then determining that the image to be discriminated has a boundary, if $G_{V9} < S_{H9}$, then there is a boundary in the vertical direction in the $3\times3$ matrix; if $G_{V9} > S_{H9}$, then there is a boundary in the horizontal direction in the $3\times3$ matrix;
when the outputted code values to which the first dispersion and the second dispersion correspond are the first code value, and the outputted code values to which the third dispersion and the fourth dispersion correspond are the second code value, then determining that the image to be discriminated has a boundary, if $G_{V9} < S_{H9}$, then there is a boundary in the vertical direction in the $3\times3$ matrix; if $G_{V9} > S_{H9}$, then there is a boundary in the horizontal direction in the $3\times3$ matrix.
Optionally, the first code value is 1, the second code value is 0. Of course, the first code value and the second code value may be other values, so long as the first code value and the second code value can be differentiated.
Hereinafter, the method for discriminating the boundary of image provided by the present disclosure will be described in detail in conjunction with specific luminance values.
As shown in FIG. 3, FIG. 3 is a schematic diagram of a second distribution of a $n\times n$ matrix and a $(n + 2)\times(n + 2)$ matrix provided by an embodiment of the present disclosure.
In $3\times3$ matrix:

the gradient in a horizontal direction:

$$G_{H9} = \sum_{i=1}^{3}\left|Y_{Hi} - Y_{H(i+1)}\right| = \left|101-228\right| + \left|228-95\right| = 260;$$

the gradient in a vertical direction:

$$G_{V9} = \sum_{i=1}^{3} \left| Y_{Vi} - Y_{V(i+1)} \right| = \left| 118 - 228 \right| + \left| 228 - 221 \right| = 117;$$

the gradient in the first diagonal direction:

$$G_{LD9} = \sum_{i=1}^{3} \left| Y_{LDi} - Y_{LD(i+1)} \right| = \left| 161 - 228 \right| + \left| 228 - 36 \right| = 259;$$

the gradient in the second diagonal direction:

$$G_{RD9} = \sum_{i=1}^{3} \left| Y_{RDi} - Y_{RD(i+1)} \right| = \left| 242 - 228 \right| + \left| 228 - 250 \right| = 36;$$

by comparing the above gradients, it can be known that the minimum first gradient is the gradient in the second diagonal direction.

In the 5×5 matrix:

the gradient in a horizontal direction:

$$G_{H25} = \sum_{i=1}^{5} \left| Y_{Hi} - Y_{H(i+1)} \right| = \left| 177 - 101 \right| + \left| 101 - 228 \right| + \left| 228 - 95 \right| + \left| 95 - 56 \right| = 375;$$

the gradient in a vertical direction:

$$G_{V25} = \sum_{i=1}^{5} \left| Y_{Vi} - Y_{V(i+1)} \right| = \left| 195 - 118 \right| + \left| 118 - 228 \right| + \left| 228 - 221 \right| + \left| 221 - 175 \right| = 240;$$

the gradient in the first diagonal direction:

$$G_{LD25} = \sum_{i=1}^{5} \left| Y_{LDi} - Y_{LD(i+1)} \right| = \left| 225 - 161 \right| + \left| 161 - 228 \right| + \left| 228 - 36 \right| + \left| 36 - 179 \right| = 466;$$

the gradient in the second diagonal direction:

$$G_{RD25} = \sum_{i=1}^{5} \left| Y_{RDi} - Y_{RD(i+1)} \right| = \left| 71 - 242 \right| + \left| 242 - 228 \right| + \left| 228 - 250 \right| + \left| 250 - 18 \right| = 439$$

by comparing the above gradients, it can be known that the minimum second gradient is the gradient in the vertical direction.

In the 3×3 matrix:

the standard deviation in a horizontal direction:

$$S_{H9} = \frac{1}{3}\sqrt{\sum_{i=1}^{3}(Y_{xi} - \overline{Y}_x)^2} = \frac{1}{3}\sqrt{(101 - 141.33)^2 + (228 - 141.33)^2 + (95 - 141.33)^2};$$
$$= 61.33152$$

$$\overline{Y}_H = \frac{\sum_{i=1}^{3} Y_{Hi}}{3} = \frac{101 + 228 + 95}{3} = 141.33 \, ;$$

the standard deviation in a vertical direction:

$$S_{V9} = \frac{1}{3}\sqrt{\sum_{i=1}^{3}(Y_{Vi} - \overline{Y}_V)^2} = \frac{1}{3}\sqrt{(118-189)^2 + (228-189)^2 + (221-189)^2} = 50.28585$$

$$\overline{Y}_V = \frac{\sum_{i=1}^{3} Y_{Vi}}{3} = \frac{118 + 228 + 221}{3} = 189 \, ;$$

the standard deviation in a first diagonal direction:

$$S_{LD9} = \frac{1}{3}\sqrt{\sum_{i=1}^{3}(Y_{LDi} - \overline{Y}_{LD})^2} = \frac{1}{3}\sqrt{(161-141.67)^2 + (228-141.67)^2 + (36-141.67)^2}$$
$$= 79.56688$$

$$\overline{Y}_{LD} = \frac{\sum_{i=1}^{3} Y_{LDi}}{3} = \frac{161 + 228 + 36}{3} = 141.67 \, ;$$

the standard deviation in the second diagonal direction:

$$S_{RD9} = \frac{1}{3}\sqrt{\sum_{i=1}^{3}(Y_{RDi} - \overline{Y}_{RD})^2} = \frac{1}{3}\sqrt{(242-240)^2 + (228-240)^2 + (250-240)^2} \, ;$$
$$= 9.092121$$

$$\overline{Y}_{RD} = \frac{\sum_{i=1}^{3} Y_{RDi}}{3} = \frac{242 + 228 + 250}{3} = 240 \, ;$$

By comparing the above standard deviations, it can be known that the first minimum standard deviation is the standard deviation in the second diagonal direction.

In the 5×5 matrix:

the standard deviation in a horizontal direction:

$$S_{H25} = \frac{1}{5}\sqrt{\sum_{i=1}^{5}(Y_{Hi} - \overline{Y}_H)^2}$$

$$= \frac{1}{5}\sqrt{(177-131.4)^2 + (101-131.4)^2 + (228-131.4)^2 + (95-131.4)^2 + (56-131.4)^2}$$

$$= 74.98166$$

$$\overline{Y}_H = \frac{\sum_{i=1}^{5} Y_{Hi}}{5} = \frac{177 + 101 + 228 + 95 + 56}{5} = 131.4 \, ;$$

the standard deviation in a vertical direction:

$$S_{V25} = \frac{1}{5}\sqrt{\sum_{i=1}^{5}(Y_{Vi} - \overline{Y}_V)^2}$$

$$= \frac{1}{5}\sqrt{(195 - 187.4)^2 + (118 - 187.4)^2 + (228 - 187.4)^2 + (221 - 187.4)^2 + (175 - 187.4)^2}$$

$$= 39.51$$

$$\overline{Y}_V = \frac{\sum_{i=1}^{5} Y_{Vi}}{5} = \frac{195 + 118 + 228 + 221 + 175}{5} = 187.4 \, ;$$

the standard deviation in a first diagonal direction:

$$S_{LD25} = \frac{1}{5}\sqrt{\sum_{i=1}^{5}(Y_{LDi} - \overline{Y}_{LD})^2}$$

$$= \frac{1}{5}\sqrt{(225 - 165.8)^2 + (161 - 165.8)^2 + (228 - 165.8)^2 + (36 - 165.8)^2 + (179 - 165.8)^2}$$

$$= 69.8839$$

$$\overline{Y}_{LD} = \frac{\sum_{i=1}^{5} Y_{LDi}}{5} = \frac{225 + 161 + 228 + 36 + 179}{5} = 165.8 \, ;$$

the standard deviation in the second diagonal direction:

$$S_{RD25} = \frac{1}{5}\sqrt{\sum_{i=1}^{5}(Y_{RDi} - \overline{Y}_{RD})^2} = \frac{1}{5}\sqrt{\begin{array}{l}(71 - 161.8)^2 + (242 - 161.8)^2 + (228 - 161.8)^2 \\ + (250 - 161.8)^2 + (18 - 161.8)^2\end{array}}$$

$$= 97.48518$$

$$\overline{Y}_{RD} = \frac{\sum_{i=1}^{5} Y_{RDi}}{5} = \frac{71 + 242 + 228 + 250 + 18}{5} = 161.8 \, .$$

By comparing the above standard deviations, it can be known that the second minimum standard deviation is the standard deviation in the vertical direction.

The first dispersion:

$$Dif = \frac{1}{3}\sqrt{(260-36)^2 + (117-36)^2 + (259-36)^2 + (36-36)^2};$$
$$= 108.7638$$

the second dispersion:

$$Dif = \frac{1}{3}\sqrt{\begin{array}{l}(61.33152-9.092121)^2 + (50.28585-9.092121)^2\\ +(79.56688-9.092121)^2 + (9.092121-9.092121)^2\end{array}};$$
$$= 32.30509$$

the third dispersion:

$$Dif = \frac{1}{3}\sqrt{(375-240)^2 + (240-240)^2 + (466-240)^2 + (439-240)^2};$$
$$= 110.001$$

the fourth dispersion:

$$Dif = \frac{1}{3}\sqrt{\begin{array}{l}(74.98166-39.51)^2 + (39.51-39.51)^2\\ +(69.8839-39.51)^2 + (97.48518-39.51)^2\end{array}}$$
$$= 24.81472$$

determining that the first dispersion $Dif > \frac{5}{3}\times36$, outputting 1, the second dispersion $Dif > \frac{5}{3}\times9.092121$, outputting 1, the third dispersion $Dif < \frac{5}{3}\times240$, outputting 0, the fourth dispersion $Dif < \frac{5}{3}\times39.51$, outputting 0, then it can be determined that the image has a boundary, and the direction of the boundary is the second diagonal direction in the 3×3 matrix.

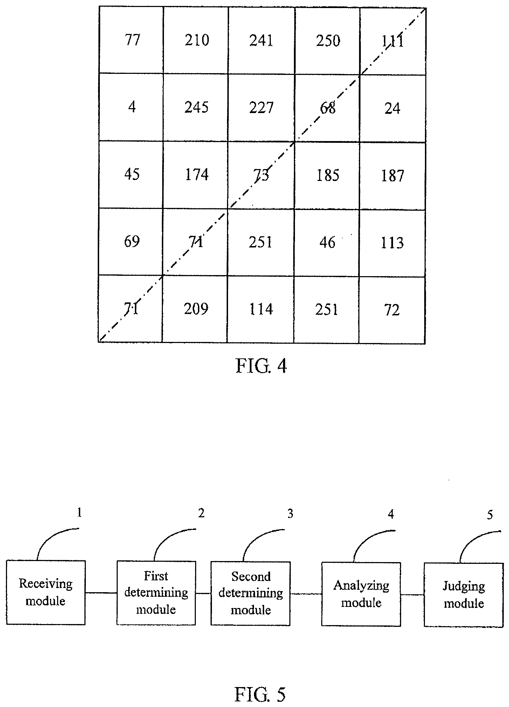

FIG. 4 is a schematic diagram of a third distribution of a $n \times n$ matrix and a $(n + 2) \times (n + 2)$ matrix provided by an embodiment of the present disclosure.

In the 3×3 matrix:

the gradient in a horizontal direction:

$$G_{H9} = \sum_{i=1}^{3}\left|Y_{Hi} - Y_{H(i+1)}\right| = |174-73| + |73-185| = 213;$$

the gradient in a vertical direction:

$$G_{V9} = \sum_{i=1}^{3}\left|Y_{Vi} - Y_{V(i+1)}\right| = |227-73| + |73-251| = 332;$$

the gradient in the first diagonal direction:

$$G_{LD9} = \sum_{i=1}^{3} \left| Y_{LDi} - Y_{LD(i+1)} \right| = \left| 68 - 73 \right| + \left| 73 - 71 \right| = 7 \, ;$$

the gradient in the second diagonal direction:

$$G_{RD9} = \sum_{i=1}^{3} \left| Y_{RDi} - Y_{RD(i+1)} \right| = \left| 245 - 73 \right| + \left| 73 - 46 \right| = 199 \, .$$

By comparing the above gradients, it can be known that the minimum first gradient is the gradient in the first diagonal direction.

In the 5×5 matrix:

the gradient in a horizontal direction:

$$G_{H25} = \sum_{i=1}^{5} \left| Y_{Hi} - Y_{H(i+1)} \right| = \left| 45 - 174 \right| + \left| 174 - 73 \right| + \left| 73 - 185 \right| + \left| 185 - 187 \right| = 344 \, ;$$

the gradient in a vertical direction:

$$G_{V25} = \sum_{i=1}^{5} \left| Y_{Vi} - Y_{V(i+1)} \right| = \left| 241 - 227 \right| + \left| 227 - 73 \right| + \left| 73 - 251 \right| + \left| 251 - 114 \right| = 483 \, ;$$

the gradient in the first diagonal direction:

$$G_{LD25} = \sum_{i=1}^{5} \left| Y_{LDi} - Y_{LD(i+1)} \right| = \left| 111 - 68 \right| + \left| 68 - 73 \right| + \left| 73 - 71 \right| + \left| 71 - 71 \right| = 50 \, ;$$

the gradient in the second diagonal direction:

$$G_{RD25} = \sum_{i=1}^{5} \left| Y_{RDi} - Y_{RD(i+1)} \right| = \left| 77 - 245 \right| + \left| 245 - 73 \right| + \left| 73 - 46 \right| + \left| 46 - 72 \right| = 393 \, .$$

By comparing the above gradients, it can be known that the minimum second gradient is the gradient in the first diagonal direction.

In the 3×3 matrix:

the standard deviation in a horizontal direction:

$$S_{H9} = \frac{1}{3} \sqrt{\sum_{i=1}^{3} (Y_{xi} - \overline{Y}_x)^2} = \frac{1}{3} \sqrt{(174 - 144)^2 + (73 - 144)^2 + (185 - 144)^2}$$
$$= 29.10136$$

$$\overline{Y}_H = \frac{\sum_{i=1}^{3} Y_{Hi}}{3} = \frac{174 + 73 + 185}{3} = 144 \, ;$$

the standard deviation in a vertical direction:

$$S_{V9} = \frac{1}{3}\sqrt{\sum_{i=1}^{3}(Y_{Vi} - \overline{Y}_V)^2} = \frac{1}{3}\sqrt{(227 - 183.67)^2 + (73 - 183.67)^2 + (251 - 183.67)^2}\; ;$$
$$= 78.86416$$

$$\overline{Y}_V = \frac{\sum_{i=1}^{3} Y_{Vi}}{3} = \frac{227 + 73 + 251}{3} = 183.67\; ;$$

the standard deviation in a first diagonal direction:

$$S_{LD9} = \frac{1}{3}\sqrt{\sum_{i=1}^{3}(Y_{LDi} - \overline{Y}_{LD})^2} = \frac{1}{3}\sqrt{(68 - 70.67)^2 + (73 - 70.67)^2 + (71 - 70.67)^2}$$
$$= 1.18634$$

$$\overline{Y}_{LD} = \frac{\sum_{i=1}^{3} Y_{LDi}}{3} = \frac{68 + 73 + 71}{3} = 70.67\; ;$$

the standard deviation in the second diagonal direction:

$$S_{RD9} = \frac{1}{3}\sqrt{\sum_{i=1}^{3}(Y_{RDi} - \overline{Y}_{RD})^2} = \frac{1}{3}\sqrt{(245 - 121.34)^2 + (73 - 121.34)^2 + (46 - 121.34)^2}$$
$$= 88.13752$$

$$\overline{Y}_{RD} = \frac{\sum_{i=1}^{3} Y_{RDi}}{3} = \frac{245 + 73 + 46}{3} = 121.34\; .$$

By comparing the above standard deviations, it can be known that the first minimum standard deviation is the standard deviation in the first diagonal direction.

In the 5×5 matrix:

the standard deviation in a horizontal direction:

$$S_{H25} = \frac{1}{5}\sqrt{\sum_{i=1}^{5}(Y_{Hi} - \overline{Y}_H)^2}$$
$$= \frac{1}{5}\sqrt{(45 - 132.8)^2 + (174 - 132.8)^2 + (73 - 132.8)^2 + (185 - 132.8)^2 + (187 - 132.8)^2}$$
$$= 74.54454$$

$$\overline{Y}_H = \frac{\sum_{i=1}^{5} Y_{Hi}}{5} = \frac{45 + 174 + 73 + 185 + 187}{5} = 132.8\; ;$$

the standard deviation in a vertical direction:

$$S_{V25} = \frac{1}{5}\sqrt{\sum_{i=1}^{5}(Y_{Vi} - \overline{Y}_{V})^2}$$

$$= \frac{1}{5}\sqrt{(241-181.2)^2 + (227-181.2)^2 + (73-181.2)^2 + (251-181.2)^2 + (114-181.2)^2}$$

$$= 73.16939$$

$$\overline{Y}_{V} = \frac{\sum_{i=1}^{5} Y_{Vi}}{5} = \frac{241+227+73+251+114}{5} = 181.2\,;$$

the standard deviation in a first diagonal direction:

$$S_{LD25} = \frac{1}{5}\sqrt{\sum_{i=1}^{5}(Y_{LDi} - \overline{Y}_{LD})^2}$$

$$= \frac{1}{5}\sqrt{(111-78.8)^2 + (68-78.8)^2 + (73-78.8)^2 + (71-78.8)^2 + (71-78.8)^2}$$

$$= 16.179$$

$$\overline{Y}_{LD} = \frac{\sum_{i=1}^{5} Y_{LDi}}{5} = \frac{111+68+73+71+71}{5} = 78.8\,;$$

the standard deviation in the second diagonal direction:

$$S_{RD25} = \frac{1}{5}\sqrt{\sum_{i=1}^{5}(Y_{RDi} - \overline{Y}_{RD})^2} = \frac{1}{5}\sqrt{\frac{(77-102.6)^2 + (245-102.6)^2 + (73-102.6)^2}{+(46-102.6)^2 + (72-102.6)^2}}$$

$$= 72.04054$$

$$\overline{Y}_{RD} = \frac{\sum_{i=1}^{5} Y_{RDi}}{5} = \frac{77+245+73+46+72}{5} = 102.6\,.$$

By comparing the above standard deviations, it can be known that the second minimum standard deviation is the standard deviation in the first diagonal direction.

The first dispersion:

$$Dif = \frac{1}{3}\sqrt{(213-7)^2 + (332-7)^2 + (7-7)^2 + (199-7)^2}\,;$$

$$= 143.343$$

the second dispersion:

$$Dif = \frac{1}{3}\sqrt{\begin{array}{l}(50.40503-1.18634)^2 + (78.86416-1.18634)^2 \\ +(1.18634-1.18634)^2 + (88.13752-1.18634)^2\end{array}}\ ;$$

$$= 42.18587$$

the third dispersion:

$$Dif = \frac{1}{3}\sqrt{(344-50)^2 + (483-50)^2 + (50-50)^2 + (393-50)^2}\ ;$$

$$= 208.5862$$

the fourth dispersion:

$$Dif = \frac{1}{3}\sqrt{\begin{array}{l}(74.5445-16.179)^2 + (73.16939-16.179)^2 \\ +(16.179-16.179)^2 + (72.04054-16.179)^2\end{array}}$$

$$= 32.95612$$

Discrimination is performed as follows: the first dispersion $Dif > \frac{5}{3} \times 7$, outputting 1, the second dispersion $Dif > \frac{5}{3} \times 1.18634$, outputting 1, the third dispersion $Dif > \frac{5}{3} \times 50$, outputting 1, the fourth dispersion $Dif > \frac{5}{3} \times 16.179$, outputting 1, then it can be determined that the image has a boundary and the direction of the boundary is the first diagonal direction in the 5×5 matrix.

It needs to be noted that, the above method is applicable to an image in any form of pixel arrangement.

As shown in FIG. 5, FIG. 5 is a schematic diagram of structure of a device for discriminating a boundary of image provided by an embodiment of the present disclosure. The present disclosure further provides an image boundary discriminating device, comprising a receiving module 1, a first determining module 2, a second determining module 3, an analyzing module 4, and a judging module 5.

The receiving module 1 is for receiving a component value information of a grayscale parameter of each pixel unit from among an image information to be discriminated to form a matrix of grayscale parameter values, and dividing, with a grayscale parameter value corresponding to a pixel unit to be processed as a center, the matrix of grayscale parameter values into a $n \times n$ matrix and a $(n+2) \times (n+2)$ matrix, n representing a number of grayscale parameter values in a row direction or in a column direction, and n being an odd number greater than 1, the grayscale parameter being a luminance parameter or a chromaticity parameter.

The first determining module 2 is for determining respectively in the $n \times n$ matrix and the $(n+2) \times (n+2)$ matrix: a minimum gradient among a gradient in a row direction, a gradient in a column direction, a gradient in a first diagonal direction, and a gradient in a second diagonal direction, where the grayscale parameter value corresponding to the pixel unit to be processed resides; and a minimum standard deviation among a standard deviation in a row direction, a standard deviation in a column direction, a standard deviation in a first diagonal direction, and a standard deviation in a second diagonal direction, where the grayscale parameter value corresponding to the pixel unit to be processed resides;

The second determining module 3 is for determining respectively in the nxn matrix and the $(n+2) \times (n+2)$ matrix: dispersion of each of the standard deviation in the row direction, the standard deviation in the column direction, the standard deviation in the first diagonal direction, and the standard deviation in the second diagonal direction with respect to the minimum standard deviation; and dispersion of each of the gradient in the row direction, the gradient in the column direction, the gradient in the first diagonal direction, and the gradient in the second diagonal direction with respect to the minimum gradient;

The analyzing module 4 is for outputting a first code value when the determined dispersion is greater than N multiples of a minimum corresponding thereto, outputting a second code value when the determined dispersion is smaller than the N multiples of the minimum corresponding thereto, the minimum being the minimum standard deviation or the minimum gradient, N being a constant greater than 1;

A judging module 5 is for determining, based on an outputted code value, whether the image to be discriminated has a boundary and in which direction the boundary is.

The present disclosure further provides a display panel, comprising the device for discriminating the boundary of image as described above. Based on the merits of the device for discriminating the boundary of image described above, the display panel provided by the present disclosure has better display effect.

**Claims**

1. A method for discriminating a boundary of image, the method comprising:

   receiving a grayscale parameter value of each pixel unit from among an image information to be discriminated to form a matrix of grayscale parameter values, and dividing, with a grayscale parameter value corresponding to a pixel unit to be processed as a center of the matrix, the matrix of grayscale parameter values into a $n \times n$ matrix and a $(n + 2) \times (n + 2)$ matrix, n representing a number of grayscale parameter values in a row direction or in a column direction (S101), and n being an odd number greater than 1, the grayscale parameter being a luminance parameter or a chromaticity parameter, **characterized by**
   determining respectively in the $n \times n$ matrix and the $(n+2) \times (n+2)$ matrix: a minimum gradient among a gradient in a row direction, a gradient in a column direction, a gradient in a first diagonal direction, and a gradient in a second diagonal direction, where the grayscale parameter value corresponding to the pixel unit to be processed resides; and a minimum standard deviation among a standard deviation in a row direction, a standard deviation in a column direction, a standard deviation in a first diagonal direction, and a standard deviation in a second diagonal direction, where the grayscale parameter value corresponding to the pixel unit to be processed resides (S102);
   determining respectively in the $n \times n$ matrix and the $(n + 2) \times (n + 2)$ matrix: dispersion of each of the standard deviation in the row direction, the standard deviation in the column direction, the standard deviation in the first diagonal direction, and the standard deviation in the second diagonal direction with respect to the minimum standard deviation; and dispersion of each of the gradient in the row direction, the gradient in the column direction, the gradient in the first diagonal direction, and the gradient in the second diagonal direction with respect to the minimum gradient (S103);
   outputting, for each determined dispersion, a first code value when the determined dispersion is greater than N multiples of a minimum corresponding thereto, outputting a second code value when the determined dispersion is smaller than the N multiples of the minimum corresponding thereto, the minimum being the minimum standard deviation or the minimum gradient, N being a constant greater than 1 (S104);
   determining, based on the outputted code values, whether the image to be discriminated has a boundary and in which direction the boundary is (S105).

2. The method for discriminating the boundary of image as claimed in claim 1, wherein determining respectively in the $n \times n$ matrix and the $(n + 2) \times (n + 2)$ matrix: a minimum gradient among a gradient in a row direction, a gradient in a column direction, a gradient in a first diagonal direction, and a gradient in a second diagonal direction, where the grayscale parameter value corresponding to the pixel unit to be processed resides; and a minimum standard deviation among a standard deviation in a row direction, a standard deviation in a column direction, a standard deviation in a first diagonal direction, and a standard deviation in a second diagonal direction, where the grayscale parameter value corresponding to the pixel unit to be processed resides comprises:

   in the $n \times n$ matrix and the $(n + 2) \times (n + 2)$ matrix, the gradient in each direction is a sum $$G_x = \sum_{i=1}^{n} \left| Y_{xi} - Y_{x(i+1)} \right|$$
   of absolute values of two adjacent grayscale parameter values in this direction, G representing a gradient, x representing a direction, $Y_{xi}$ representing an i-th grayscale parameter value in the x direction, n representing a number of grayscale parameter values in a row direction or in a column direction;
   comparing the gradient in the row direction, the gradient in the column direction, the gradient in the first diagonal direction, and the gradient in the second diagonal direction in the $n \times n$ matrix to obtain a first minimum gradient, comparing the gradient in the row direction, the gradient in the column direction, the gradient in the first diagonal direction, and the gradient in the second diagonal direction in the $(n + 2) \times (n + 2)$ matrix to obtain a second minimum gradient;

$$S_x = \frac{1}{n}\sqrt{\sum_{i=1}^{n}(Y_{xi} - \overline{Y}_x)^2} ,$$

determining, based on formula ⟨above⟩ in the $n \times n$ matrix and the $(n + 2) \times (n + 2)$ matrix: a standard deviation in a row direction, a standard deviation in a column direction, a standard deviation in a first diagonal direction, and a standard deviation in a second diagonal direction, where the grayscale parameter value corresponding to the pixel unit to be processed resides, wherein S represents the standard deviation, x represents a direction, $Y_{xi}$ represents an i-th grayscale parameter value in the x direction, $\overline{Y}_x$ represents an average of grayscale parameter values in the x direction, n represents the number of gray scale parameter

$$\overline{Y}_x = \frac{\sum_{i=1}^{n} Y_{xi}}{n} ;$$

values in a row direction or in a column direction, comparing the standard deviation in the row direction, the standard deviation in the column direction, the standard deviation in the first diagonal direction, and the standard deviation in the second diagonal direction in the $n \times n$ matrix to obtain a first minimum standard deviation, comparing the standard deviation in the row direction, the standard deviation in the column direction, the standard deviation in the first diagonal direction, and the standard deviation in the second diagonal direction in the $(n + 2) \times (n + 2)$ matrix to obtain a second minimum standard deviation.

3. The method for discriminating the boundary of image as claimed in claim 2, wherein determining respectively in the $n \times n$ matrix and the $(n + 2) \times (n + 2)$ matrix: dispersion of each of the standard deviation in the row direction, the standard deviation in the column direction, the standard deviation in the first diagonal direction, and the standard deviation in the second diagonal direction with respect to the minimum standard deviation; and dispersion of each of the gradient in the row direction, the gradient in the column direction, the gradient in the first diagonal direction, and the gradient in the second diagonal direction with respect to the minimum gradient comprises:

determining the first dispersion $\text{Dif}_1$ based on equation

$$\text{Dif}_1 = \frac{1}{3}\sqrt{(H_1 - A_1)^2 + (V_1 - A_1)^2 + (LD_1 - A_1)^2 + (RD_1 - A_1)^2}$$

wherein $H_1$, $V_1$, $LD_1$, $RD_1$ respectively represents the gradient in the row direction, the gradient in the column direction, the gradient in the first diagonal direction, and the gradient in the second diagonal direction in the $n \times n$ matrix, $A_1$ represents the first minimum gradient;
determining the second dispersion $\text{Dif}_2$ based on equation

$$\text{Dif}_2 = \frac{1}{3}\sqrt{(H_2 - A_2)^2 + (V_2 - A_2)^2 + (LD_2 - A_2)^2 + (RD_2 - A_2)^2}$$

wherein $H_2$, $V_2$, $LD_2$, $RD_2$ respectively represent the standard deviation in the row direction, the standard deviation in the column direction, the standard deviation in the first diagonal direction, and the standard deviation in the second diagonal direction in the $n \times n$ matrix, $A_2$ represents the first minimum standard deviation;
determining the third dispersion $\text{Dif}_3$ based on equation

$$\text{Dif}_3 = \frac{1}{3}\sqrt{(H_3 - A_3)^2 + (V_3 - A_3)^2 + (LD_3 - A_3)^2 + (RD_3 - A_3)^2}$$

wherein $H_3$, $V_3$, $LD_3$, $RD_3$ respectively represents the gradient in the row direction, the gradient in the column direction, the gradient in the first diagonal direction, and the gradient in the second diagonal direction in the $(n + 2) \times (n + 2)$ matrix, $A_3$ represents the second minimum gradient; and
determining the fourth dispersion $\text{Dif}_4$ based on equation

$$\text{Dif}_4 = \frac{1}{3}\sqrt{(H_4 - A_4)^2 + (V_4 - A_4)^2 + (LD_4 - A_4)^2 + (RD_4 - A_4)^2}$$

wherein $H_4$, $V_4$, $LD_4$, $RD_4$ respectively represent the standard deviation in the row direction, the standard deviation in the column direction, the standard deviation in the first diagonal direction, and the standard deviation in the second diagonal direction in the $(n+2)\times(n+2)$ matrix, $A_4$ represents the second minimum standard deviation.

4. The method for discriminating the boundary of image as claimed in claim 3, wherein outputting a first code value when the determined dispersion is greater than N multiples of a minimum corresponding thereto, outputting a second code value when the determined dispersion is smaller than the N multiples of the minimum corresponding thereto, the minimum being the minimum standard deviation or the minimum gradient comprises:
   if $Dif > N \times A$, then outputting the first code value accordingly, if $Dif < N \times A$, then outputting the second code value accordingly, N being a constant greater than 1; when $Dif$ represents the first dispersion, A represents the first minimum gradient; when $Dif$ represents the second dispersion, A represents the first minimum standard deviation; when $Dif$ represents the third dispersion, A represents the second minimum gradient; when $Dif$ represents the fourth dispersion, A represents the second minimum standard deviation.

5. The method for discriminating the boundary of image as claimed in claim 4, wherein N is a value ranging from 1.4 to 2.0.

6. The method for discriminating the boundary of image as claimed in claim 5, wherein N is a value of 5/3.

7. The method for discriminating the boundary of image as claimed in any of claims 4 to 6, wherein the determining, based on the outputted code values, whether the image to be discriminated has a boundary and in which direction the boundary is comprises:

   when the outputted code values to which the first dispersion, the second dispersion, the third dispersion, and the fourth dispersion correspond all are the second code value, determining that the image to be discriminated has no boundary;
   when the outputted code values to which the first dispersion, the second dispersion, the third dispersion, and the fourth dispersion correspond all are the first code value, determining that the image to be discriminated has a boundary, and the boundary is in a direction to which smaller one of the second gradient and the second standard deviation corresponds;
   when the outputted code values to which the first dispersion, the second dispersion, and the fourth dispersion correspond are the first code value, and the outputted code value to which the third dispersion corresponds is the second code value, determining that the image to be discriminated has a boundary, and the boundary is in a direction to which smaller one of the first gradient and the first standard deviation corresponds;
   when the outputted code values to which the first dispersion, the second dispersion, and the third dispersion correspond are the first code value, and the outputted code value to which the fourth dispersion corresponds is the second code value, then determining that the image to be discriminated has a boundary, and the boundary is in a direction to which smaller one of the first gradient and the first standard deviation corresponds;
   when the outputted code values to which the first dispersion and the second dispersion correspond are the first code value, and the outputted code values to which the third dispersion and the fourth dispersion correspond are the second code value, then determining that the image to be discriminated has a boundary, and the boundary is in a direction to which smaller one of the first gradient and the first standard deviation corresponds.

8. The method for discriminating the boundary of image as claimed in claim 7, wherein the first code value is 1, the second code value is 0.

9. A device for discriminating a boundary of image, the device comprising:

   a receiving module (1) for receiving a grayscale parameter value of each pixel unit from among an image information to be discriminated to form a matrix of grayscale parameter values, and dividing, with a grayscale parameter value corresponding to a pixel unit to be processed as a center of the matrix, the matrix of grayscale parameter values into a $n\times n$ matrix and a $(n+2)\times(n+2)$ matrix, n representing a number of grayscale parameter values in a row direction or in a column direction, and n being an odd number greater than 1, the grayscale parameter being a luminance parameter or a chromaticity parameter;

a first determining module (2) for determining respectively in the $n \times n$ matrix and the $(n + 2) \times (n + 2)$ matrix: a minimum gradient among a gradient in a row direction, a gradient in a column direction, a gradient in a first diagonal direction, and a gradient in a second diagonal direction where the grayscale parameter value corresponding to the pixel unit to be processed resides; and a minimum standard deviation among a standard deviation in a row direction, a standard deviation in a column direction, a standard deviation in a first diagonal direction, and a standard deviation in a second diagonal direction, where the grayscale parameter value corresponding to the pixel unit to be processed resides;

a second determining module (3) for determining respectively in the $n \times n$ matrix and the $(n + 2) \times (n + 2)$ matrix: dispersion of each of the standard deviation in the row direction, the standard deviation in the column direction, the standard deviation in the first diagonal direction, and the standard deviation in the second diagonal direction with respect to the minimum standard deviation; and dispersion of each of the gradient in the row direction, the gradient in the column direction, the gradient in the first diagonal direction, and the gradient in the second diagonal direction with respect to the minimum gradient;

an analyzing module (4) for outputting, for each determined dispersion, a first code value when the determined dispersion is greater than N multiples of a minimum corresponding thereto, outputting a second code value when the determined dispersion is smaller than the N multiples of the minimum corresponding thereto, the minimum being the minimum standard deviation or the minimum gradient, N being a constant greater than 1;

a judging module (5) for determining, based on the outputted code values, whether the image to be discriminated has a boundary and in which direction the boundary is.

10. A display panel, comprising the device for discriminating the boundary of image as claimed in claim 9.


**Patentansprüche**

1. Verfahren zum Diskriminieren einer Bildgrenze, wobei das Verfahren aufweist:

Empfangen eines Graustufen-Parameterwerts jeder Pixeleinheit aus zu diskriminierenden Bildformationen, um eine Matrix von Graustufen-Parameterwerten zu bilden, und Unterteilen, mit einem Graustufen-Parameterwert entsprechend einer zu verarbeitenden Pixeleinheit als einem Zentrum der Matrix, der Matrix von Graustufen-Parameterwerten in eine nxn-Matrix und eine (n+2)x(n+2)-Matrix, wobei n eine Anzahl von Graustufen-Parameterwerten in einer Zeilenrichtung oder in einer Spaltenrichtung (S101) repräsentiert, und n eine ungerade Zahl größer als 1 ist, wobei der Graustufen-Parameter ein Luminanz-Parameter oder ein Chromatizität-Parameter ist, **gekennzeichnet durch**

Bestimmen jeweils in der nxn-Matrix und der (n+2)x(n+2)-Matrix: einen Minimum-Gradienten unter einem Gradienten in einer Zeilenrichtung, einem Gradienten in einer Spaltenrichtung, einem Gradienten in einer ersten Diagonalrichtung und einen Gradienten in einer zweiten Diagonalrichtung, wo der Graustufen-Parameterwert entsprechend der zu verarbeitenden Pixeleinheit liegt; und einer Minimum-Standardabweichung unter einer Standardabweichung in einer Zeilenrichtung, einer Standardabweichung in einer Spaltenrichtung, einer Standardabweichung in einer ersten Diagonalrichtung und einer Standardabweichung in einer zweiten Diagonalrichtung, wo der Graustufen-Parameterwert entsprechend der zu verarbeitenden Pixeleinheit liegt (S102);

Bestimmen jeweils in der nxn-Matrix und der (n+2)x(n+2)-Matrix: einer Streuung von jeder der Standardabweichung in der Zeilenrichtung, der Standardabweichung in der Spaltenrichtung, der Standardabweichung in der ersten Diagonalrichtung und der Standardabweichung in der zweiten Diagonalrichtung bezogen auf die Minimum-Standardabweichung; und einer Streuung von jedem von dem Gradienten in der Zeilenrichtung, dem Gradienten in der Spaltenrichtung, dem Gradienten in der ersten Diagonalrichtung und dem Gradienten in der zweiten Diagonalrichtung mit Bezug auf den Minimum-Gradienten (S103);

Ausgeben für jede bestimmte Streuung eines ersten Codewerts, sobald die bestimmte Streuung größer als N multipliziert mit einem dazugehörigen Minimum ist, Ausgeben eines zweiten Codewerts, sobald die bestimmte Streuung kleiner als N multipliziert mit dem dazugehörigen Minimum ist, wobei das Minimum die Minimum-Standardabweichung oder der Minimum-Gradient ist, wobei N eine Konstante größer als 1 ist (S104);

Bestimmen, basierend auf den ausgegebenen Codewerten, ob das zu diskriminierende Bild eine Grenze hat und in welcher Richtung diese Grenze liegt (S105).

2. Verfahren zum Diskriminieren der Bildgrenze gemäß Anspruch 1, wobei Bestimmen jeweils in der nxn-Matrix und der $(n+2) \times (n+2)$-Matrix: eines Minimum-Gradienten unter einem Gradienten in Zeilenrichtung, einem Gradienten in Spaltenrichtung, einem Gradienten in einer ersten Diagonalrichtung und einem Gradienten in einer zweiten Diagonalrichtung, wo der Graustufen-Parameterwert entsprechend der zu verarbeitenden Pixeleinheit liegt; und einer Minimum-Standardabweichung unter einer Standardabweichung in einer Zeilenrichtung, einer Standardabweichung in einer Spaltenrichtung, einer Standardabweichung in einer ersten Diagonalrichtung und einer Standardabweichung in einer zweiten Diagonalrichtung, wo der Graustufen-Parameterwert entsprechend der zu verarbeitenden Pixeleinheit liegt, aufweist:

in der nxn-Matrix und der (n+2)×(n+2)-Matrix ist der Gradient in jeder Richtung eine Summe

$$G_x = \sum_{i=1}^{n} \left| Y_{xi} - Y_{x(i+1)} \right|$$

der Absolutwerte zweier benachbarter GraustufenParameterwerte in dieser Richtung, wobei G einen Gradienten repräsentiert, x eine Richtung repräsentiert, $Y_{xi}$ einen i-ten Graustufen-Parameterwert in der x-Richtung repräsentiert, n eine Zahl von Graustufen-Parameterwerten in einer Zeilenrichtung oder in einer Spaltenrichtung repräsentiert;

Vergleichen des Gradienten in der Zeilenrichtung, des Gradienten in der Spaltenrichtung, des Gradienten in der ersten Diagonalrichtung und des Gradienten in der zweiten Diagonalrichtung in der nxn-Matrix, um einen ersten Minimum-Gradienten zu erhalten, Vergleichen des Gradienten in der Zeilenrichtung, des Gradienten in der ersten Diagonalrichtung in der (n+2)×(n + 2)-Matrix, um einen zweiten Minimum-Gradienten zu erhalten;

$$S_x = \frac{1}{n} \sqrt{\sum_{i=1}^{n} (Y_{xi} - \overline{Y}_x)^2}$$

Bestimmen basierend auf der Formel in der nxn-Matrix und der (n+2)×(n+2)-Matrix einer Standardabweichung in einer Zeilenrichtung, einer Standardabweichung in einer Spaltenrichtung, einer Standardabweichung in einer ersten Diagonalrichtung und einer Standardabweichung in einer zweiten Diagonalrichtung, wo der Graustufen-Parameterwert entsprechend der zu verarbeitenden Pixeleinheit liegt, wobei S die Standardabweichung repräsentiert, x eine Richtung repräsentiert, $Y_{xi}$ einen i-ten Graustufen-Parameterwert in der x-Richtung repräsentiert, $\overline{Y}_x$ einen Durchschnittsgraustufen-Parameterwert in der x-Richtung repräsentiert, n die Anzahl von Graustufen-Parameterwerten in einer Zeilenrichtung oder in einer Spaltenrichtung reprä-

$$\overline{Y}_x = \frac{\sum_{i=1}^{n} Y_{xi}}{n} \ ;$$

sentiert, wobei

Vergleichen der Standardabweichung in der Zeilenrichtung, der Standardabweichung in der Spaltenrichtung, der Standardabweichung in der ersten Diagonalrichtung und der Standardabweichung in der zweiten Diagonalrichtung in der n×n-Matrix, um eine erste Minimum-Standardabweichung zu erhalten, Vergleichen der Standardabweichung in der Zeilenrichtung, der Standardabweichung in der Spaltenrichtung, der Standardabweichung in der ersten Diagonalrichtung und der Standardabweichung in der zweiten Diagonalrichtung in der (n+2)×(n+2) Matrix, um eine zweite Minimum-Standardabweichung zu erhalten.

3. Verfahren zum Diskriminieren der Bildgrenze gemäß Anspruch 2, wobei Bestimmen jeweils in der n×n-Matrix und der (n+2)×(n+2)-Matrix: einer Streuung von jeder der Standardabweichung in der Zeilenrichtung, der Standardabweichung in der Spaltenrichtung, der Standardabweichung in der ersten Diagonalrichtung und der Standardabweichung in der zweiten Diagonalrichtung mit Bezug auf die Minimum-Standardabweichung; und einer Streuung von jedem von dem Gradienten in der Zeilenrichtung, dem Gradienten in der Spaltenrichtung, dem Gradienten in der ersten Diagonalrichtung und dem Gradienten in der zweiten Diagonalrichtung mit Bezug auf den Minimum-Gradienten aufweist:

Bestimmung der ersten Streuung Dif$_1$ basierend auf der Gleichung

$$\text{Dif}_1 = \frac{1}{3} \sqrt{(H_1 - A_1)^2 + (V_1 - A_1)^2 + (LD_1 - A_1)^2 + (RD_1 - A_1)^2}$$

wobei $H_1$, $V_1$, $LD_1$, $RD_1$ jeweils repräsentieren den Gradienten in der Zeilenrichtung, den Gradienten in der Spaltenrichtung, den Gradienten in der ersten Diagonalrichtung und den Gradienten in der zweiten Diagonalrichtung, in der n×n-Matrix, $A_1$ den ersten Minimum-Gradienten repräsentiert;
Bestimmen der zweiten Streuung Dif$_2$ basierend auf der Gleichung

$$\mathrm{Dif}_2 = \frac{1}{3}\sqrt{(H_2 - A_2)^2 + (V_2 - A_2)^2 + (LD_2 - A_2)^2 + (RD_2 - A_2)^2}$$

wobei $H_2$, $V_2$, $LD_2$, $RD_2$ jeweils repräsentieren die Standardabweichung in der Zeilenrichtung, die Standardabweichung in der Spaltenrichtung, die Standardabweichung in der ersten Diagonalrichtung und die Standardabweichung in der zweiten Diagonalrichtung, in der $n \times n$-Matrix, $A_2$ die erste Minimumstandardabweichung repräsentiert;
Bestimmen der dritten Streuung $\mathrm{Dif}_3$ basierend auf der Gleichung

$$\mathrm{Dif}_3 = \frac{1}{3}\sqrt{(H_3 - A_3)^2 + (V_3 - A_3)^2 + (LD_3 - A_3)^2 + (RD_3 - A_3)^2}$$

wobei $H_3$, $V_3$, $LD_3$, $RD_3$ jeweils repräsentieren den Gradienten in der Zeilenrichtung, den Gradienten in der Spaltenrichtung, den Gradienten in der ersten Diagonalrichtung und den Gradienten in der zweiten Diagonalrichtung, in der $(n+2) \times (n+2)$-Matrix, $A_3$ den zweiten Minimum-Gradienten repräsentiert; und
Bestimmen der vierten Streuung $\mathrm{Dif}_4$ basierend auf einer Gleichung

$$\mathrm{Dif}_4 = \frac{1}{3}\sqrt{(H_4 - A_4)^2 + (V_4 - A_4)^2 + (LD_4 - A_4)^2 + (RD_4 - A_4)^2}$$

wobei $H_4$, $V_4$, $LD_4$, $RD_4$ jeweils repräsentieren die Standardabweichung in der Zeilenrichtung, die Standardabweichung in der Spaltenrichtung, die Standardabweichung in der ersten Diagonalrichtung und die Standardabweichung in der zweiten Diagonalrichtung, in der $(n+2) \times (n+2)$-Matrix, wobei $A_2$ die zweite Minimum-Standardabweichung repräsentiert.

4. Verfahren zum Diskriminieren der Bildgrenze gemäß Anspruch 3, wobei Ausgeben eines ersten Codewerts, sobald die bestimmte Streuung größer als N multipliziert mit dem dazugehörigen Minimums ist, Ausgeben eines zweiten Codewerts, sobald die bestimmte Streuung kleiner als N multipliziert mit dem dazugehörigen Minimum ist, wobei das Minimum die Minimum-Standardabweichung oder der Minimum-Gadient ist, aufweist:
wenn *Dif* > *N* × *A*, dann entsprechendes Ausgeben des ersten Codewerts, wenn *Dif* < *N* × *A*, dann entsprechendes Ausgeben des zweiten Codewerts, wobei N eine Konstante größer als 1 ist; wenn *Dif* die erste Streuung repräsentiert, repräsentiert A den ersten Minimum-Gradienten; wenn *Dif* die zweite Streuung repräsentiert, repräsentiert A die erste Minimum-Standardabweichung; wenn *Dif* die dritte Streuung repräsentiert, repräsentiert A den zweiten Minimum-Gradienten; wenn *Dif* die vierte Streuung repräsentiert, repräsentiert A die zweite Minimum-Standardabweichung.

5. Verfahren zum Diskriminieren der Bildgrenze gemäß Anspruch 4, wobei N ein Wert im Bereich von 1,4 bis 2,0 ist.

6. Verfahren zum Diskriminieren der Bildgrenze gemäß Anspruch 5, wobei N ein Wert von 5/3 ist.

7. Verfahren zum Diskriminieren der Bildgrenze gemäß einem der Ansprüche 4 bis 6, wobei das Bestimmen basierend auf den ausgegebenen Codewerten, ob das zu diskriminierende Bild eine Grenze hat und in welcher Richtung die Grenze liegt, aufweist:

wenn die ausgegebenen Codewerte, denen die erste Streuung, die zweite Streuung, die dritte Streuung und die vierte Streuung entsprechen, alle der zweite Codewert sind, Bestimmen, dass das zu diskriminierende Bild keine Grenze hat;
wenn die ausgegebenen Codewerte, denen die erste Streuung, die zweite Streuung, die dritte Streuung und die vierte Streuung entsprechen, alle der erste Codewert sind, Bestimmen, dass das zu diskriminierende Bild eine Grenze hat, und dass die Grenze in einer Richtung liegt, welcher der kleinere von dem zweiten Gradienten und der zweiten Standardabweichung entspricht;
wenn die ausgegebenen Codewerte, die der ersten Streuung, der zweiten Streuung und der vierten Streuung entsprechen, alle der erste Codewert sind, und der ausgegebene Codewert, dem die dritte Streuung entspricht, der zweite Codewert ist, Bestimmen, dass das zu diskriminierende Bild eine Grenze hat, und dass die Grenze in einer Richtung liegt, welcher der kleinere von dem ersten Gradienten und der ersten Standardabweichung entspricht;

wenn die ausgegebenen Codewerte, die der ersten Streuung, der zweiten Streuung und der dritten Streuung entsprechen, der erste Codewert sind, und der ausgegebene Codewert, dem die vierte Streuung entspricht, der zweite Codewert ist, dann Bestimmen, dass das zu diskriminierende Bild eine Grenze hat und dass die Grenze in einer Richtung liegt, welcher der kleinere von dem ersten Gradienten und der ersten Standardabweichung entspricht;

wenn die ausgegebenen Codewerte, denen die erste Streuung und die zweite Streuung entsprechen, der erste Codewert sind, die ausgegebenen Codewerte, denen die dritte Streuung und die vierte Streuung entsprechen, der zweite Codewert sind, dann Bestimmen, dass das zu diskriminierende Bild eine Grenze hat, und die Grenze in einer Richtung ist, welcher der kleinere von dem ersten Gradienten und der ersten Standardabweichung entspricht.

**8.** Verfahren zum Diskriminieren der Bildgrenze gemäß Anspruch 7, wobei der erste Codewert 1 ist, der zweite Codewert 0 ist.

**9.** Vorrichtung zum Diskriminieren einer Bildgrenze, wobei die Vorrichtung aufweist:

ein Empfangsmodul (1) zum Empfangen eines Graustufen-Parameterwerts jeder Pixeleinheit aus zu diskriminierenden Bildformationen, um eine Matrix aus Graustufen-Parameterwerten zu bilden, und Unterteilen, mit einem Graustufen-Parameterwert entsprechend einer zu verarbeitenden Pixeleinheit als einem Zentrum der Matrix, der Matrix von Graustufen-Parameterwerten in eine n×n-Matrix und eine (n+2)×(n+2)-Matrix, wobei n eine Anzahl von Graustufen-Parameterwerten in einer Zeilenrichtung oder in einer Spaltenrichtung repräsentiert, und n eine ungerade Zahl größer als 1 ist, wobei der Graustufen-Parameter ein Luminanz-Parameter oder ein Chromatizität-Parameter ist;

ein erstes Bestimmungsmodul (2) zum Bestimmen jeweils in der n×n-Matrix und der (n+2)×(n+2)-Matrix eines Minimum-Gradienten unter einem Gradienten in einer Zeilenrichtung, einem Gradienten in einer Spaltenrichtung, einem Gradienten in einer ersten Diagonalrichtung und einen Gradienten in einer zweiten Diagonalrichtung, wo der Graustufen-Parameterwert entsprechend der zu verarbeitenden Pixeleinheit liegt; und einer Minimum-Standardabweichung unter einer Standardabweichung in einer Zeilenrichtung, einer Standardabweichung in einer Spaltenrichtung, einer Standardabweichung in einer ersten Diagonalrichtung und einer Standardabweichung in einer zweiten Diagonalrichtung, wo der Graustufen-Parameterwert entsprechend der zu verarbeitenden Pixeleinheit liegt;

einen zweiten Bestimmungsmodul (3) zum Bestimmen jeweils in der n×n-Matrix und der (n+2)×(n+2)-Matrix einer Streuung von jeder von der Standardabweichung in der Zeilenrichtung, der Standardabweichung in der Spaltenrichtung, der Standardabweichung in der ersten Diagonalrichtung und der Standardabweichung in der zweiten Diagonalrichtung mit Bezug auf die Minimum-Standardabweichung; und einer Streuung von jedem von dem Gradienten in der Zeilenrichtung, dem Gradienten in der Spaltenrichtung, dem Gradienten in der ersten Diagonalrichtung und dem Gradienten in der zweiten Diagonalrichtung mit Bezug auf den Minimum-Gradienten;

einem Analysemodul (4) zum Ausgeben, für jede bestimmte Streuung eines ersten Codewerts, wenn die bestimmte Streuung größer als N multipliziert mit dem dazugehörigen Minimum ist, Ausgeben eines zweiten Codewerts, wenn die bestimmte Streuung kleiner als N multipliziert mit dem dazugehörigen Minimums ist, wobei das Minimum die Minimum-Standardabweichung oder der Minimum-Gradient ist, wobei N eine Konstante größer als 1 ist;

einem Beurteilungsmodul (5) zum Bestimmen, basierend auf den ausgegebenen Codewerten, ob das zu diskriminierende Bild eine Grenze hat und in welcher Richtung diese Grenze liegt.

**10.** Anzeige-Panel mit der Vorrichtung zum Diskriminieren der Bildgrenze gemäß Anspruch 9.

## Revendications

**1.** Procédé pour discriminer une bordure d'image, le procédé comprenant :

la réception d'une valeur de paramètre d'échelle de gris de chaque unité de pixel prise à partir d'une information d'image qui est destinée à être discriminée de manière à former une matrice de valeurs de paramètre d'échelle de gris, et la division, à l'aide d'une valeur de paramètre d'échelle de gris qui correspond à une unité de pixel qui est destinée à être traitée en tant que centre de la matrice, de la matrice de valeurs de paramètre d'échelle de gris selon une matrice $n \times n$ et une matrice $(n + 2) \times (n + 2)$, n représentant un nombre de valeurs de paramètre d'échelle de gris dans une direction de rangée ou dans une direction de colonne (S101), et n étant un nombre impair supérieur à 1, le paramètre d'échelle de gris étant un paramètre de luminance ou un paramètre de chrominance, **caractérisé par** :

la détermination, respectivement dans la matrice *n x n* et dans la matrice *(n + 2) x (n + 2)* : d'un gradient minimum pris parmi un gradient dans une direction de rangée, un gradient dans une direction de colonne, un gradient dans une première direction en diagonale et un gradient dans une seconde direction en diagonale, où la valeur de paramètre d'échelle de gris qui correspond à l'unité de pixel qui est destinée à être traitée réside ; et d'un écart type minimum pris parmi un écart type dans une direction de rangée, un écart type dans une direction de colonne, un écart type dans une première direction en diagonale et un écart type dans une seconde direction en diagonale, où la valeur de paramètre d'échelle de gris qui correspond à l'unité de pixel qui est destinée à être traitée réside (S102) ;

la détermination, respectivement dans la matrice *n x n* et dans la matrice *(n + 2) x (n + 2)* : d'une dispersion de chaque écart type pris parmi l'écart type dans la direction de rangée, l'écart type dans la direction de colonne, l'écart type dans la première direction en diagonale et l'écart type dans la seconde direction en diagonale par rapport à l'écart type minimum ; et d'une dispersion de chaque gradient pris parmi le gradient dans la direction de rangée, le gradient dans la direction de colonne, le gradient dans la première direction en diagonale et le gradient dans la seconde direction en diagonale par rapport au gradient minimum (S103) ;

l'émission en sortie, pour chaque dispersion déterminée, d'une première valeur de code lorsque la dispersion déterminée est supérieure à *N* multiples d'un minimum qui lui correspond, l'émission en sortie d'une seconde valeur de code lorsque la dispersion déterminée est inférieure aux *N* multiples du minimum qui lui correspond, le minimum étant l'écart type minimum ou le gradient minimum, *N* étant une constante supérieure à 1 (S104) ; et

la détermination, sur la base des valeurs de code émises en sortie, de si oui ou non l'image qui est destinée à être discriminée comporte une bordure et de la direction dans laquelle la bordure s'étend (S105).

2.  Procédé pour discriminer la bordure d'image tel que revendiqué selon la revendication 1, dans lequel la détermination, respectivement dans la matrice *n x n* et dans la matrice *(n + 2) x (n + 2)* : d'un gradient minimum pris parmi un gradient dans une direction de rangée, un gradient dans une direction de colonne, un gradient dans une première direction en diagonale et un gradient dans une seconde direction en diagonale, où la valeur de paramètre d'échelle de gris qui correspond à l'unité de pixel qui est destinée à être traitée réside ; et d'un écart type minimum pris parmi un écart type dans une direction de rangée, un écart type dans une direction de colonne, un écart type dans une première direction en diagonale et un écart type dans une seconde direction en diagonale, où la valeur de paramètre d'échelle de gris qui correspond à l'unité de pixel qui est destinée à être traitée réside comprend :

dans la matrice *n x n* et dans la matrice *(n + 2) x (n + 2)*, le fait que le gradient dans chaque direction est une

$$G_x = \sum_{i=1}^{n} \left| Y_{xi} - Y_{x(i+1)} \right|$$

somme de valeurs absolues de deux valeurs de paramètre d'échelle de gris adjacentes dans cette direction, *G* représentant un gradient, *x* représentant une direction, $Y_{xi}$ représentant une i-ème valeur de paramètre d'échelle de gris dans la direction *x, n* représentant un nombre de valeurs de paramètre d'échelle de gris dans une direction de rangée ou dans une direction de colonne ;

la comparaison du gradient dans la direction de rangée, du gradient dans la direction de colonne, du gradient dans la première direction en diagonale et du gradient dans la seconde direction en diagonale dans la matrice *n x n* de manière à obtenir un premier gradient minimum, la comparaison du gradient dans la direction de rangée, du gradient dans la direction de colonne, du gradient dans la première direction en diagonale et du gradient dans la seconde direction en diagonale dans la matrice *(n + 2) x (n + 2)* de manière à obtenir un second gradient minimum ;

$$S_x = \frac{1}{n} \sqrt{\sum_{i=1}^{n} (Y_{xi} - \overline{Y}_x)^2} \; ,$$

la détermination, sur la base de la formule dans la matrice *n x n* et dans la matrice *(n + 2) x (n + 2)* : d'un écart type dans une direction de rangée, d'un écart type dans une direction de colonne, d'un écart type dans une première direction en diagonale et d'un écart type dans une seconde direction en diagonale, où la valeur de paramètre d'échelle de gris qui correspond à l'unité de pixel qui est destinée à être traitée réside, formule dans laquelle S représente l'écart type, *x* représente une direction, $Y_{xi}$ représente une i-ème valeur de paramètre d'échelle de gris dans la direction *x*, $\overline{Y}_x$ représente une moyenne de valeurs de paramètre d'échelle de gris dans la direction *x*, *n* représente un nombre de valeurs de paramètre d'échelle de

$$\overline{Y}_x = \frac{\sum_{i=1}^{n} Y_{xi}}{n} \; ; \; \text{et}$$

gris dans une direction de rangée ou dans une direction de colonne,

la comparaison de l'écart type dans la direction de rangée, de l'écart type dans la direction de colonne, de l'écart type dans la première direction en diagonale et de l'écart type dans la seconde direction en diagonale dans la matrice $n \times n$ de manière à obtenir un premier écart type minimum, la comparaison de l'écart type dans la direction de rangée, de l'écart type dans la direction de colonne, de l'écart type dans la première direction en diagonale et de l'écart type dans la seconde direction en diagonale dans la matrice $(n + 2) \times (n + 2)$ de manière à obtenir un second écart type minimum.

**3.** Procédé pour discriminer la bordure d'image tel que revendiqué selon la revendication 2, dans lequel la détermination, respectivement dans la matrice $n \times n$ et dans la matrice $(n + 2) \times (n + 2)$ : de la dispersion de chaque écart type pris parmi l'écart type dans la direction de rangée, l'écart type dans la direction de colonne, l'écart type dans la première direction en diagonale et l'écart type dans la seconde direction en diagonale par rapport à l'écart type minimum ; et de la dispersion de chaque gradient pris parmi le gradient dans la direction de rangée, le gradient dans la direction de colonne, le gradient dans la première direction en diagonale et le gradient dans la seconde direction en diagonale par rapport au gradient minimum comprend :

la détermination de la première dispersion $Dif_1$ sur la base de l'équation :

$$Dif_1 = \frac{1}{3}\sqrt{(H_1 - A_1)^2 + (V_1 - A_1)^2 + (LD_1 - A_1)^2 + (RD_1 - A_1)^2}$$

équation dans laquelle $H_1$, $V_1$, $LD_1$, $RD_1$ représentent respectivement le gradient dans la direction de rangée, le gradient dans la direction de colonne, le gradient dans la première direction en diagonale et le gradient dans la seconde direction en diagonale dans la matrice $n \times n$, et $A_1$ représente le premier gradient minimum ;
la détermination de la deuxième dispersion $Dif_2$ sur la base de l'équation :

$$Dif_2 = \frac{1}{3}\sqrt{(H_2 - A_2)^2 + (V_2 - A_2)^2 + (LD_2 - A_2)^2 + (RD_2 - A_2)^2}$$

équation dans laquelle $H_2$, $V_2$, $LD_2$, $RD_2$ représentent respectivement l'écart type dans la direction de rangée, l'écart type dans la direction de colonne, l'écart type dans la première direction en diagonale et l'écart type dans la seconde direction en diagonale dans la matrice $n \times n$, et $A_2$ représente le premier écart type minimum ;
la détermination de la troisième dispersion $Dif_3$ sur la base de l'équation :

$$Dif_3 = \frac{1}{3}\sqrt{(H_3 - A_3)^2 + (V_3 - A_3)^2 + (LD_3 - A_3)^2 + (RD_3 - A_3)^2}$$

équation dans laquelle $H_3$, $V_3$, $LD_3$, $RD_3$ représentent respectivement le gradient dans la direction de rangée, le gradient dans la direction de colonne, le gradient dans la première direction en diagonale et le gradient dans la seconde direction en diagonale dans la matrice $(n + 2) \times (n + 2)$, et $A_3$ représente le second gradient minimum ; et
la détermination de la quatrième dispersion $Dif_4$ sur la base de l'équation :

$$Dif_4 = \frac{1}{3}\sqrt{(H_4 - A_4)^2 + (V_4 - A_4)^2 + (LD_4 - A_4)^2 + (RD_4 - A_4)^2}$$

équation dans laquelle $H_4$, $V_4$, $LD_4$, $RD_4$ représentent respectivement l'écart type dans la direction de rangée, l'écart type dans la direction de colonne, l'écart type dans la première direction en diagonale et l'écart type dans la seconde direction en diagonale dans la matrice $(n + 2) \times (n + 2)$, et $A_4$ représente le second écart type minimum.

**4.** Procédé pour discriminer la bordure d'image tel que revendiqué selon la revendication 3, dans lequel l'émission en sortie d'une première valeur de code lorsque la dispersion déterminée est supérieure à $N$ multiples d'un minimum qui lui correspond, l'émission en sortie d'une seconde valeur de code lorsque la dispersion déterminée est inférieure aux $N$ multiples du minimum qui lui correspond, le minimum étant l'écart type minimum ou le gradient minimum, comprend :

si *Dif > N x A,* alors l'émission en sortie de la première valeur de code en conséquence, si *Dif < N x A,* alors l'émission en sortie de la seconde valeur de code en conséquence, *N* étant une constante supérieure à 1 ; lorsque *Dif* représente la première dispersion, *A* représente le premier gradient minimum ; lorsque *Dif* représente la deuxième dispersion, *A* représente le premier écart type minimum ; lorsque *Dif* représente la troisième dispersion, *A* représente le second gradient minimum ; lorsque *Dif* représente la quatrième dispersion, *A* représente le second écart type minimum.

5. Procédé pour discriminer la bordure d'image tel que revendiqué selon la revendication 4, dans lequel *N* est une valeur qui s'inscrit à l'intérieur de la plage qui va de 1,4 à 2,0.

6. Procédé pour discriminer la bordure d'image tel que revendiqué selon la revendication 5, dans lequel *N* est une valeur de 5/3.

7. Procédé pour discriminer la bordure d'image tel que revendiqué selon l'une quelconque des revendications 4 à 6, dans lequel la détermination, sur la base des valeurs de code émises en sortie, de si oui ou non l'image qui est destinée à être discriminée comporte une bordure et de la direction dans laquelle la bordure s'étend comprend :

lorsque les valeurs de code émises en sortie auxquelles la première dispersion, la deuxième dispersion, la troisième dispersion et la quatrième dispersion correspondent sont toutes la seconde valeur de code, alors la détermination du fait que l'image qui est destinée à être discriminée ne comporte pas de bordure ;
lorsque les valeurs de code émises en sortie auxquelles la première dispersion, la deuxième dispersion, la troisième dispersion et la quatrième dispersion correspondent sont toutes la première valeur de code, alors la détermination du fait que l'image qui est destinée à être discriminée comporte une bordure, et que la bordure est dans une direction à laquelle le paramètre plus petit pris parmi le second gradient et le second écart type correspond ;
lorsque les valeurs de code émises en sortie auxquelles la première dispersion, la deuxième dispersion et la quatrième dispersion correspondent sont la première valeur de code, et que la valeur de code émise en sortie à laquelle la troisième dispersion correspond est la seconde valeur de code, alors la détermination du fait que l'image qui est destinée à être discriminée comporte une bordure, et que la bordure est dans une direction à laquelle le paramètre plus petit pris parmi le premier gradient et le premier écart type correspond ;
lorsque les valeurs de code émises en sortie auxquelles la première dispersion, la deuxième dispersion et la troisième dispersion correspondent sont la première valeur de code, et que la valeur de code émise en sortie à laquelle la quatrième dispersion correspond est la seconde valeur de code, alors la détermination du fait que l'image qui est destinée à être discriminée comporte une bordure, et que la bordure est dans une direction à laquelle le paramètre plus petit pris parmi le premier gradient et le premier écart type correspond ; et
lorsque les valeurs de code émises en sortie auxquelles la première dispersion et la deuxième dispersion correspondent sont la première valeur de code, et que les valeurs de code émises en sortie auxquelles la troisième dispersion et la quatrième dispersion correspondent sont la seconde valeur de code, alors la détermination du fait que l'image qui est destinée à être discriminée comporte une bordure, et que la bordure est dans une direction à laquelle le paramètre plus petit pris parmi le premier gradient et le premier écart type correspond.

8. Procédé pour discriminer la bordure d'image tel que revendiqué selon la revendication 7, dans lequel la première valeur de code est 1 et la seconde valeur de code est 0.

9. Dispositif pour discriminer une bordure d'image, le dispositif comprenant :

un module de réception (1) pour recevoir une valeur de paramètre d'échelle de gris de chaque unité de pixel prise à partir d'une information d'image qui est destinée à être discriminée de manière à former une matrice de valeurs de paramètre d'échelle de gris, et pour diviser, à l'aide d'une valeur de paramètre d'échelle de gris qui correspond à une unité de pixel qui est destinée à être traitée en tant que centre de la matrice, la matrice de valeurs de paramètre d'échelle de gris selon une matrice *n x n* et une matrice *(n + 2) x (n + 2), n* représentant un nombre de valeurs de paramètre d'échelle de gris dans une direction de rangée ou dans une direction de colonne, et *n* étant un nombre impair supérieur à 1, le paramètre d'échelle de gris étant un paramètre de luminance ou un paramètre de chrominance ;
un premier module de détermination (2) pour déterminer, respectivement dans la matrice *n x n* et dans la matrice *(n + 2) x (n + 2)* : un gradient minimum pris parmi un gradient dans une direction de rangée, un gradient dans une direction de colonne, un gradient dans une première direction en diagonale et un gradient dans une seconde direction en diagonale, où la valeur de paramètre d'échelle de gris qui correspond à l'unité de pixel qui est destinée à être traitée réside ; et un écart type minimum pris parmi un écart type dans une direction de rangée, un écart type dans une direction de colonne, un écart type dans une première direction en diagonale et un écart type dans une seconde direction en diagonale, où la valeur de paramètre d'échelle de gris qui correspond à l'unité de pixel qui est destinée à être traitée réside ;

un second module de détermination (3) pour déterminer, respectivement dans la matrice *n x n* et dans la matrice *(n + 2) x (n + 2)* : une dispersion de chaque écart type pris parmi l'écart type dans la direction de rangée, l'écart type dans la direction de colonne, l'écart type dans la première direction en diagonale et l'écart type dans la seconde direction en diagonale par rapport à l'écart type minimum ; et une dispersion de chaque gradient pris parmi le gradient dans la direction de rangée, le gradient dans la direction de colonne, le gradient dans la première direction en diagonale et le gradient dans la seconde direction en diagonale par rapport au gradient minimum ;

un module d'analyse (4) pour émettre en sortie, pour chaque dispersion déterminée, une première valeur de code lorsque la dispersion déterminée est supérieure à *N* multiples d'un minimum qui lui correspond, pour émettre en sortie une seconde valeur de code lorsque la dispersion déterminée est inférieure aux *N* multiples du minimum qui lui correspond, le minimum étant l'écart type minimum ou le gradient minimum, *N* étant une constante supérieure à 1 ; et

un module d'appréciation (5) pour déterminer, sur la base des valeurs de code émises en sortie, si oui ou non l'image qui est destinée à être discriminée comporte une bordure et la direction dans laquelle la bordure s'étend.

10. Panneau d'affichage, comprenant le dispositif pour discriminer la bordure d'image tel que revendiqué selon la revendication 9.

S101

Dividing, with a grayscale parameter value to which a sub-image unit to be processed corresponds as a center, the matrix of grayscale parameter values into a n×n matrix and a (n+2)×(n+2) matrix

S102

Determining respectively in the n×n matrix and the (n+2)×(n+2) matrix: a minimum gradient among a gradient in a row direction, a gradient in a column direction, a gradient in a first diagonal direction, and a gradient in a second diagonal direction; and a minimum standard deviation among a standard deviation in a row direction, a standard deviation in a column direction, a standard deviation in a first diagonal direction, and a standard deviation in a second diagonal direction, where the grayscale parameter value to which the sub-image unit to be processed corresponds resides

S103

Determining respectively in the n×n matrix and the (n+2)×(n+2) matrix: Dispersion of each of the standard deviation in the row direction, the standard deviation in the column direction, the standard deviation in the first diagonal direction, and the standard deviation in the second diagonal direction with respect to the minimum standard deviation; and dispersion of each of the gradient in the row direction, the gradient in the column direction, the gradient in the first diagonal direction, and the gradient in the second diagonal direction with respect to the minimum gradient

S104

Outputting a first code value when the determined dispersion is greater than N multiples of a minimum corresponding thereto, outputting a second code value when the determined dispersion is smaller than the N multiples of the minimum corresponding thereto, the minimum being the minimum standard deviation or the minimum gradient, N being a constant greater than 1

S105

Determining, based on an outputted code value, whether the image to be discriminated has a boundary and in which direction it has the boundary

FIG. 1

| $Y_{1,1}$ | $Y_{1,2}$ | $Y_{1,3}$ | $Y_{1,4}$ | $Y_{1,5}$ |
|---|---|---|---|---|
| $Y_{2,1}$ | $Y_{2,2}$ | $Y_{2,3}$ | $Y_{2,4}$ | $Y_{2,5}$ |
| $Y_{3,1}$ | $Y_{3,2}$ | $Y_{3,3}$ | $Y_{3,4}$ | $Y_{3,5}$ |
| $Y_{4,1}$ | $Y_{4,2}$ | $Y_{4,3}$ | $Y_{4,4}$ | $Y_{4,5}$ |
| $Y_{5,1}$ | $Y_{5,2}$ | $Y_{5,3}$ | $Y_{5,4}$ | $Y_{5,5}$ |

FIG. 2

| 71 | 90 | 195 | 69 | 225 |
|---|---|---|---|---|
| 89 | 242 | 118 | 161 | 24 |
| 177 | 101 | 228 | 95 | 56 |
| 234 | 36 | 221 | 250 | 162 |
| 179 | 168 | 175 | 106 | 18 |

FIG. 3

| 77 | 210 | 241 | 250 | 111 |
|----|-----|-----|-----|-----|
| 4 | 245 | 227 | 68 | 24 |
| 45 | 174 | 73 | 185 | 187 |
| 69 | 71 | 251 | 46 | 113 |
| 71 | 209 | 114 | 251 | 72 |

FIG. 4

```
┌───────────┐   ┌───────────┐   ┌───────────┐   ┌───────────┐   ┌───────────┐
│           │ 1 │   First   │ 2 │  Second   │ 3 │           │ 4 │           │ 5
│ Receiving │───│determining│───│determining│───│ Analyzing │───│  Judging  │
│  module   │   │  module   │   │  module   │   │  module   │   │  module   │
└───────────┘   └───────────┘   └───────────┘   └───────────┘   └───────────┘
```

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SANJAY KUMAR MAURYA et al.** Image Enhancement by Intensity based Interpolation and Selective Threshold. *International Conference on Communication Systems and Network Technologies,* 2012